# EUROPEAN PATENT SPECIFICATION

(11) **EP 3 525 944 B1**
(45) Date of publication and mention of the grant of the patent: **11.12.2019**
(21) Application number: 18826503.7
(22) Date of filing: 30.11.2018
(51) Int. Cl.: B09C 1/08, C02F 1/72, C02F 101/32, C02F 101/36

(54) **METHOD FOR REMOVAL, SEPARATION OR DEGRADATION OF PERSISTENT ORGANIC POLLUTANTS (POPS) FROM A SUBSTRATE**
VERFAHREN ZUR ENTFERNUNG, TRENNUNG ODER ZUM ABBAU VON PERSISTENTEN ORGANISCHEN SCHADSTOFFEN AUS EINEM SUBSTRAT
PROCÉDÉ POUR L'ÉLIMINATION, LA SÉPARATION OU LA DÉGRADATION DE POLLUANTS ORGANIQUES PERSISTANTS À PARTIR D'UN SUBSTRAT

(30) Priority: 22.12.2017 EP 17210058
(43) Date of publication of application: 21.08.2019
(73) Proprietor: Arva Greentech AG, 6300 Zug (CH)
(72) Inventor: SERVYY, Sergey, 10629 Berlin (DE)
(74) Representative: Hertin und Partner Rechts- und Patentanwälte PartG mbB
(86) International application number: PCT/EP2018/083154
(87) International publication number: WO 2019/120940

(56) References cited:
- WO-A1-2013/093903
- US-A1- 2010 215 437

## Description

The present invention relates to a method for removal, separation or degradation of one or more persistent organic pollutant(s) (POPs) present in a substrate, the method comprising (i) the provision of a POP-contaminated substrate; (ii) a first reaction stage comprising adding to the substrate a basic solution (solution 1), and optionally one or more additives selected from the group comprising a transphase catalyst (TPC) and a hydrogen peroxide dissociation catalyst, and incubating the substrate with solution 1 and optionally the one or more additives for at least 15 minutes; and (iii) a second reaction stage comprising adding to the substrate a hydrogen peroxide solution (solution 2) and optionally one or more additives selected from the group comprising a TPC and a hydrogen peroxide dissociation catalyst, wherein a hydrogen peroxide dissociation catalyst and a TPC are added during the first and/or the second reaction stage.

### BACKGROUND

Environmental contamination by persistent organic pollutants (POPs) still remains a genuine concern for the ecological controlling authorities worldwide. POPs contaminations can be subdivided based on the contaminated substrate into contamination of soil, groundwater, reservoirs and ocean/sea water and air. The most persistent and problematic contaminants could be found in soil and groundwater, and comprise polychlorinated hydrocarbons (PCHs), polycyclic aromatic hydrocarbons (PAHs), polychlorinated biphenyls (PCBs), chlorinated solvents, petroleum products and pharmaceutical leftovers.

POPs contamination is an environmental concern because some of them are hard to be biologically (environmentally) destroyed. Furthermore, POPs with high bioavailability possess extremely high toxicity levels. Numerous landfills and contaminated sites worldwide need to be decontaminated and are still pending for efficient and environmentally friendly technologies, until they are just conserved and staying hazardous.

The main approaches for site decontamination could be subdivided into in situ and ex situ methods. Ex situ technologies include excavating soils or other contaminated material followed by land filling, thermal desorption, thermal destruction (incineration), soil washing, biological remediation, vacuum extraction, etc. However, although some ex situ methods are considered to be relatively efficient, they are time consuming and highly expensive. Moreover, ex-situ methods obviously could not solve the problem of pollution and contamination of big volumes and areas, because the excavation by itself generates unreasonably high costs.

In situ technologies include chemical oxidation or other chemical treatment (such as solvent extraction), photocatalysis, electrochemical treatment or bioremediation on-site.

Photocatalysis for organic pollutants degradation has been suggested using both semiconductors and solar energy. For example, photocatalysis based on pure titanium dioxide were used for the purification of oil-contaminated soil. However, these methods are characterized by a low efficiency and long process, and are only useful for the uppermost layer of the soil.

Electrokinetic (EK) and electrochemical remediation is the application of a low electric potential or direct current to electrodes inserted into the soil, inducing electroosmotic flow of the pore fluid and the electromigration of charged ions towards the electrode of opposite charge. This method is often coupled with technologies such as in situ chemical oxidation. The limitation of this method is its long remediation time, which may vary from several days to several years.

Biological remediation is the preferred method from an environmental point of view. However, it has the limitation that only low quantities of pollutants can be degraded.

In situ chemical oxidation (ISCO) is a common method, providing some advantages over other technologies, such as low costs, relatively high degradation efficiency, providing a good basis for subsequent bioremediation. In addition, it is also implemented over a much shorter time frame. Since the reaction is almost immediate, such treatment is far more rapid than biological techniques, and can be faster than thermal or vapor recovery technologies.

The most common oxidizing agents used in in situ technologies are, among others: permanganate, hydrogen peroxide application variants (i.e. Fenton's reagent) and ozone. However, each of these oxidizing agents has several disadvantages, including leftover-contamination for the Fenton's reagent and long treatment time with high cost equipment for ozone oxidizing.

An example of a modern approach of an oxidizing technology for degrading various persistent organic pollutants is the method described in WO 2013/093903. However, the method of WO 2013/093903 was determined to cause only partial oxidation of hydrocarbons (HC), and demonstrated low performances on oil HC decontamination of polluted soils during in situ application. Furthermore, in the method of WO 2013/093903 superoxide is generated in an aqueous phase, which is impeding the decontamination process in biphasic (oil-water) systems, which are usually present when the method is used for the decontamination of POP-contaminated substrates. It was found that in absence of transphase catalyzers the reaction possesses very low efficiency. Further, the transphase catalysts described in WO 2013/093903 appeared to be expensive and inefficient. Additionally, the recommended quantities of the catalyst according to WO 2013/093903 were highly exceeding catalytic quantities and indicate that the reagents described as transphase catalysts in the context of WO 2013/093903 do not act as catalysts but as regular reagents. It could be concluded that the chosen catalysts are unstable in conditions of superoxidation. In the context of the present patent application, the method described in WO 2013/093903 is also referred to as the *technology of comparison.*

Importantly, the method of WO 2013/093903 does not disclose the use of a hydrogen peroxide dissociation catalyst. Furthermore, the method of WO 2013/093903 is performed as a one-stage reaction wherein a premixed solution comprising hydrogen peroxide and alkali hydroxide is brought into contact with a contaminated substrate, leading to the generation of superoxide before contacting the substrate. This one-step method can lead to insufficient processing of substrates since superoxide may be consumed before the solution could get into contact with all the contaminated substrate and due to an inhomogeneous distribution of the solution in or on the substrate.

Another example of a method for remediation of contaminated soil or ground water is disclosed in US 2010/ 215437A1. The method described therein involves Mn(IV), which is brought into contact with the contaminated substrate. Importantly, the method should be performed comprising the addition of a peroxide and a buffered aqueous solution with a pH of 6-10, because the method is more efficient under such pH conditions. Therefore, the method should preferably contain a pH adjustment step to achieve a near neutral pH during the reaction.

In an attempt to develop novel, potentially more efficient remediation method, a skilled person would not combine the methods of WO 2013/093903 and US 2010/ 215437A1, because the method of US 2010/ 215437A1 is thought to not be compatible with the alkaline milieu necessary for the method of WO 2013/093903.

In view of the state of the art and the disadvantageous of known decontamination methods, there is a urgent need in the art for the provision of effective, cost-efficient and environmentally friendly methods for the removal, separation or degradation of persistent organic pollutant(s) (POPs) present in substrates such as soils, gravel, liquids and surfaces that can be applied in situ and ex situ.

### SUMMARY OF THE INVENTION

In light of the prior art the technical problem underlying the present invention is the provision of alternative and/or improved means and methods for the removal, separation or degradation of persistent organic pollutant(s) (POPs) present in substrates.

This problem is solved by the features of the independent claims. Preferred embodiments of the present invention are provided by the dependent claims.

The invention relates to a method for removal, separation or degradation of one or more persistent organic pollutant(s) (POPs) present in a substrate as disclosed in claim 1. Said method comprising
- provision of a POP-contaminated substrate,
- a first reaction stage comprising
   ∘ adding to the substrate a basic solution (solution 1), and optionally one or more additives selected from the group comprising a transphase catalyst (TPC) and a hydrogen peroxide dissociation catalyst, and
   ∘ incubating the substrate with the solution 1 and optionally the one or more additives for at least 15 minutes, and
- a second reaction stage comprising
   ∘ adding to the substrate a hydrogen peroxide solution (solution 2) and optionally one or more additives selected from the group comprising a TPC and a hydrogen peroxide dissociation catalyst,
- wherein a hydrogen peroxide dissociation catalyst and a TPC are added at least during the first or the second reaction stage.

According to a preferred embodiment of the invention, the additives of the first and/or second reaction stage comprise a foam forming agent. Preferably, the additives of the first reaction stage comprise a hydrogen peroxide dissociation catalyst.

The method of the invention and in particular the preferred embodiments of the invention represent an efficient and environmentally friendly method for removing or degrading various persistent organic pollutants from a substrate. Importantly, the method is largely devoid of the disadvantages of the methods of the state of the art. The method of the invention can be applied for the removal of POPs from a substrate. Removal can either refer to the complete destruction of POPs or the separation of POPs from the substrate. This process is also called detoxification or remediation of a substrate in the context of the method of the invention.

In the method of the invention, different chemical reactions have been combined in a non-obvious and surprising way to create an unexpectedly efficient method for the oxidation and concomitant degradation of POPs. It is a great advantage of the method of the invention that it effectively degrades a great variety of different POPs, which are also called contaminants in the context of the invention. POPs might be present in a complex mixture of contaminants in the contaminated substrates. Furthermore, it was entirely surprising that the method of the invention can effectively be applied to a large variety of different contaminated substrates, that comprise solid objects and surfaces that do not absorb any liquids, such as metal surfaces, gravel, stones, concrete, glass or any other kind of solid surface; as well as porous materials, including materials that can absorb liquids or get soaked with liquids, such as for example soil or sand; and even contaminated liquids, such as in particular mineral oil or other defined liquids that may be contaminated with POPs.

In the context of the present invention, a contaminated "substrate" can be any kind of contaminated material, which may be found in the environment, such as all kinds of soils, sands, stones, gravel, water, ground water, sea water, salt-water, fresh water and biological materials, such as plants. Further exemplary substrates comprise all kinds of contaminated solid materials, objects, liquids, or items that have been exposed to contaminating POPs. Preferred substrates of the invention comprise mineral oil, surfaces of machines and technical materials or equipment, such as, for example, railway tracks.

The performance of the first and the second reaction stage of the method of the invention leads to the consistent production of hydroperoxide and superoxide radicals and mitigates the generation of hazardous reaction-by-products and leftovers, which might be generated through incomplete degradation or oxidation. Such hazardous or toxic by-products or reaction leftovers comprise partially oxidized POPs, which might still be hazardous, such as for example epoxides. In general, the terms (reaction) "by-product" and "leftover" refer to incompletely oxidized or degraded POPs that are still present in a contaminated substrate after a chemical remediation process, which might be due to incomplete or inefficient degradation or oxidation.

Furthermore, in the context of the present invention the terms "removal", "separation", "destruction", "decrease" or "degradation" of POPs refer to a remediation or decontamination of a contaminated substrate leading to a decrease of the content of the contaminating POP in the substrate, for example a decreased mass-percentage of the POPs to the total mass of the treated substrate. Herein the method of the invention may also be referred to as the reaction of the invention.

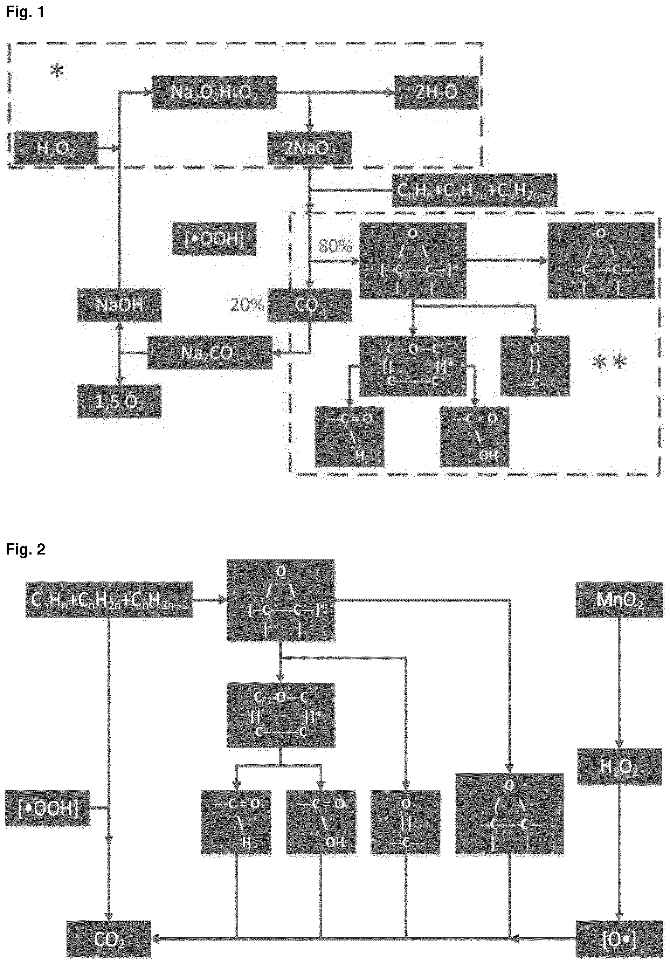

The method of the invention enables the significant and unexpectedly efficient removal, decrease and/or destruction of POPs but also of unwanted reaction by-products, which normally occur as reaction products after performing chemical remediation processes of the state of art. For example, the *technology of comparison* described in WO 2013/093903 leads to the accumulation polyaromatic compounds such as PAHs. Moreover, it is well known in the art of organic chemistry that such reactions in slightly different conditions are used for hydrocarbon (HC) epoxidation with consequent purification of the resultant PAHs for use as artificial flavors. Such reactions are described in Figure 1. Importantly, such PAH oil HC derivatives are extremely toxic and considered carcinogenic. Accordingly, it is a great advantage of the method of the invention that the generation and accumulation of PAHs is avoided due to the performance of the second and the optional subsequent reaction stages. The method of the present invention is much more effective than known methods in the degradation of POPs and thereby avoids the generation of partial oxidation products.

It is an important advantage of the invention that through the performance of the method in at least two sequential reaction stages a more efficient and comprehensive degradation of POPs can be achieved. This is due to the fact that during the first reaction stage, the whole substrate to be treated can get into contact with solution 1 before the second reaction stage is performed (addition of solution 2 to the substrate, which is in contact with solution 1). The same applies vice versa for the case, wherein reaction stage 2 is performed before reaction stage 1.

Accordingly, the reaction resulting from bringing solution 1 in contact with solution 2 can occur homogenously throughout the whole substrate volume or surface, and is not focused on the location where the solutions first contacts the substrate, as it could be the case when the solutions are added simultaneously.

This represents an important advantage towards the method of WO 2013/093903, which comprises combining hydrogen peroxide and alkali hydroxide to form a superoxide-containing solution that is brought into contact with the contaminated substrate. This one stage reaction may only lead to a partial removal of contaminants, which mainly occurs in the area or space of the substrate that is first contacted with the superoxide-containing solution, because superoxide may be consumed before the solution can get into contact with all the contaminated substrate.

Furthermore, the method comprises an at least 15 minute incubation time between the reaction stages 1 and 2, or vice versa. This represents an important advantage of the method of the invention in comparison to one-stage methods of the state of the art, since this incubation period allows the finalization of the respective reaction stage before proceeding with the successive reaction stage of the method of the invention. The incubation period therefore enables complete or almost complete finalization of the respective reaction stage, leading to more effective production of oxidative radicals and an overall more effective remediation process.

Furthermore, performing the method of the present invention in two stages with an incubation period of at least 15 minutes in between allows the volatilization of gases that may be generated upon contacting the contaminated substrates with solution 1 or 2 during the initial reaction stage in certain embodiments of the invention. Therefore, the incubation period allows a more homogenous distribution of the solutions on or in the substrate during the reaction stages, which is not disturbed by gas formation and generation of gas filled spaces in or on the substrate.

Accordingly, the method of the invention enables a more efficient reaction and resulting POP removal throughout the whole substrate due to the incubation period in between the reaction stages of the method.

In the context of the present invention, the second reaction stage may be considered as resembling to Fenton's reagent. However, it should be noted that the character of the reaction and its active products, which are obtained through interaction with a hydrogen peroxide dissociation catalyst, such as manganese oxide, and organic peroxide, depends on the pH of the reaction medium. In the context of the method of the present invention, superoxide (O2-·) is obtained in basic or alkaline conditions during the second reaction stage. Surprisingly, it turned out that superoxide production is most effective and active under the alkaline conditions of the method of the present invention as compared to other reaction conditions, technologies or methods.

This result is in unexpected contrast to observations made in the state of the art, where superoxide generation in the presence of Mn(IV), which may be used as a hydrogen peroxide dissociation catalyst in the context of the present invention, has been described as being most efficient in a near neutral environment of pH 6-10, preferably 7.

In the context of the invention, the term "reaction stage" refers to individual steps of the method of the present invention that can be performed subsequently and during which specific chemical reactions can occur. The method of the invention comprises several reaction stages. As used herein, the term "reaction" can refer a certain reaction stage or to the whole method of the invention comprising several reaction stages.

In the context of the method of the present invention the contaminated substrates, such as soils or gravel, will not be contaminated with significant amounts Fe or Mn surplus as remnants of the method of the invention, because the method of the invention requires only extremely low quantities of the hydrogen peroxide dissociation catalyst. This represents a great advantage as compared to chemical remediation methods of the state of the art employing Fenton's reagent, which require comparably high amounts of iron (Fe) salts and/or oxides that will contaminate the substrate after the remediation process. Fenton's reaction requires the introduction of high amounts of Fe ions, which remain in the substrate/soil after the decontamination process and represent an unfavorable pollutant. For instance, Fe remnants can strongly alter the condition after the decontamination reaction leading to an increased pH, since the Fe ions are in acid media.

In contrast, the hydrogen peroxide dissociation catalyst used in the method of the invention preferably comprises Manganese (Mn), which is even regarded as beneficial for the soil microbiota and therefore the low quantities of Mn that might remain in the substrate, preferably soil, even contributes to the complete recovery of the substrate after removal of the contaminants. Therefore, the introduction of low levels of Mn-containing hydrogen peroxide dissociation catalysts in the context of the present invention can be considered as useful for the regeneration of the substrate, such as soil, because of the biogenic properties of this element, leading to the regeneration of the naturally occurring microbiota of the soil.

It is a further advantage of the method of the present advantage that it can be applied in different modes, such as, without limitation, in situ, meaning on site without removing or moving the substrate from its usual location, where the contamination occurred; or ex situ, which involves removing a substrate from its usual location to perform the remediation process elsewhere. The ex situ mode may involve the excavating soils or other contaminated substrates, which may be followed by land filling. Subsequently, the method of the present invention can be performed in a different location and under different conditions compared to the normal environment or location of the substrate. Preferably, an ex situ method of the invention may be performed in a reactor, a mixing mode reactor, a close-loop reactor or any other suitable chemical reaction known to a person skilled in the art. It should be highlighted here, that mixing might increase the efficiency of the method of the invention with respect to the removal or destruction of the POPs.

In embodiments, the invention is performed in mixing mode, wherein the reaction components of the method of the invention are mixed during one or more reaction stages and/or during an incubation period between reaction stages. It has been determined that mixing of the reaction components significantly increases reaction performance due to de facto mechanical enhancement of the reaction surface. Through mixing or agitation of the substrate after addition of the solutions of the method, the pollutant comprised by the substrate is frequently exposed to a new portion of the respective reagents, until the process finalizes.

The mixing mode for the substrate decontamination could be provided through the use of different types of industrial mixers directly on site, or on the special landfills. The mixing mode could be implemented as the main process or as an additional mode after the first reaction stage is over before adding of MnO₂ catalyzer, so to mix the polluted substrate until superoxide is producing to get the additional decontamination.

It is a great advantage of the method of the present invention that during its application through mixing mode hydrogen peroxide can be generated by adding solid chemical substances containing H₂O₂ in contact with water producing superoxide radicals. Furthermore, it is possible to add sodium hydroxide in the form of solid dry substance through the mixing mode as well. Consumption of dry components can be easily calculated according to amount of water in reaction volume.

The method of the present invention provides several advances as compared to known methods of the state of the art, including the reduction of required reagent quantities and the possibility to completely degrade or destruct the POPs without generating remaining reaction leftovers in form of toxic or hazardous molecules. In contrast to all known decontamination methods, the method of the present invention can achieve full destruction of the contaminating POPs, its leftovers and derivatives even when the method is performed as an in situ method.

Furthermore, it is possible to sub-divide the different reaction stages of the method of the present invention into several sub-stages, by applying the respective solutions in fractions that can incubate with the contaminated substrate for a defined time before the next fraction of the same reaction stage is added or before proceeding to the next reaction stage. The individual reaction stages may be repeated, if required, for example when the contaminated POPs have not been completely removed or degraded by the preceding reaction stage.

In preferred embodiments of the invention, the first reaction stage is performed before the second reaction stage. In further embodiments of the invention, the second reaction stage is performed before the first reaction stage.

The order of application of individual reaction stages can be transposed vice versa and each individual stage may be repeated, if required, for example when the contaminated POPs have not been completely removed or degraded by the preceding reaction stage.

Furthermore, the method of the present invention is suitable for combination with other decontamination methods, such as bioremediation.

Bioremediation is a process used to treat contaminated substrates, including water, soil and subsurface material, by altering environmental conditions to stimulate growth of microorganisms and degrade the target pollutants. In many cases, bioremediation is less expensive and more sustainable than other remediation alternatives. Bioremediation comprises biological treatment methods used to treat wastes including wastewater, industrial waste and solid waste. Many bioremediation processes involve oxidation-reduction reactions where either an electron acceptor (commonly oxygen) is added to stimulate oxidation of a reduced pollutant (e.g. hydrocarbons) or an electron donor (commonly an organic substrate) is added to reduce oxidized pollutants (nitrate, perchlorate, oxidized metals, chlorinated solvents, explosives and propellants) and therefore share this feature with the method of the present invention. In bioremediation approaches, additional nutrients, vitamins, minerals, and pH buffers may be added to optimize conditions for the microorganisms. In some cases, specialized microbial cultures are added (bioaugmentation) to further enhance biodegradation. Some examples of bioremediation related technologies are phytoremediation, mycoremediation, bioventing, bioleaching, landfarming, bioreactor, composting, bioaugmentation, rhizofiltration, and biostimulation.

Surprisingly, the combination of the method of the invention with bioremediation methods can lead to synergistic effects of extremely efficient POP degradation that is much more efficient than it could be expected from the results of the individual methods. For example, the method of the present invention can be used as a pretreatment of a contaminated substrate that is not accessible to bioremediation. Due to the degradation of the initially present POPs, successive bioremediation can be used to finalize the remediation process. The method of the present invention is particularly suitable for this, because no toxic reactions are used and the reaction leads to the generation of naturally occurring substances such as CO₂, H₂O and Na₂CO₃.

In the context of the present invention, the concentrations and relative amounts of the reagents that are added to the substrate in the different reaction stages are suitably adjusted to the respective application. The amounts and concentrations may vary based on the kind of substrate and or the kind(s) of POPs to be degraded. Also, in situ performance of the method may require different conditions as compared to ex situ performance. A skilled person is able to adjust the ratios, amounts and concentration provided herein to the respective situation.

In general, during the performance of the method of the present invention superoxide anions are generated according to the following sequence of reactions:

(I) 2MOH + H₂O₂ → M₂O₂ + 2H₂O

(II) M₂O₂ + 2H₂O₂ → 2MO₂ + 2H₂O

In the context of the above formula, MOH stands for metal hydroxide, such as NaOH, but could be replaced by any other base that may be able to generate OH- anions in aqueous solution.

According to the method of the present invention, at least two aqueous solution should be prepared, as basic solution (solution 1) and a hydrogen peroxide solution (solution 2). The basic solution (solution 1) may comprise any base that is capable of forming OH- anions in aqueous solution, and preferably is a metal hydroxide solution, such as for example aluminum hydroxide, beryllium hydroxide, cobalt(II) hydroxide, copper(II) hydroxide, curium hydroxide, gold(III) hydroxide, iron(II) hydroxide, mercury(II) hydroxide, nickel(II) hydroxide, tin(II) hydroxide, uranyl hydroxide, zinc hydroxide or zirconium(IV) hydroxide. More preferably the basic solution 1 comprises an alkali hydroxide, such as for example lithium hydroxide (LiOH), sodium hydroxide (NaOH), potassium hydroxide (KOH), rubidium hydroxide (RbOH) or cesium hydroxide (CsOH). A further preferred base for the preparation of solution 1 of the present invention is sodium methylate (CH₃ONa, also called sodium methoxide), which is formed by the deprotonation of methanol and is a routinely used base in organic chemistry.

Solution 1 is used in the context of the method of the present invention to create an alkaline environment in the reaction mixture of solution 1 and the contaminated substrate, preferably with a strong alkaline pH in the range of 12-14. In the context of the present invention, the term "reaction mixture" refers to mixtures comprising the contaminated substrates and reaction components that are added to the substrate during the stages of the method of the invention. The term "reaction components" refers to the different solutions, compounds comprised in the solutions and additives that are added to the substrate during the method of the invention. Reaction mixtures may comprise the contaminated substrate as well as one or more of solution 1, 2 and 3, hydrogen peroxide, a base, preferably a metal hydroxide such as NaOH, or the additives that might be added during the different reaction stages. The composition of the reaction mixture is changing over the course of the method of the present invention.

The preferred volume of solution 1 to be employed and the concentration of the one or more bases in solution 1 depends on the volume and the kind of substrate and/or the POPs as well as on the kind of based used for the preparation of the basic solution. A person skilled in the art is able to determine a suitable volume and concentration of solution 1 to saturate or cover the whole contaminated substrate to be treated in order to create an environment with a pH of 12-14.

In alternative embodiments of the invention, solution 1 is prepared and added to the substrate in a volume and concentration of the base suitable for generating an alkaline environment of pH 8-14, 8.1-13.9, 8.2-13.8, 8.3-13.7, 8.4-13.6, 8.5-13.5, 8.6-13.4, 8.7-13.3, 8.8-13.2, 8,9-13.1, 9-13.0, 9.1-12.9, 9.2-12.8, 9.3-12.7, 9.4-12.6, 9.5-12.5, 9.6-12.4, 9.7-12.3, 9.8-12.2, 9,9-12.1, 10-12, 10.1-11.9, 10.2-11.8, 10.3-111.7, 10.4-11.6, 10.5-11.5, 10.6-11.4, 10.7-11.3, 10.8-11.2, 10,9-11.1 or 11.

Surprisingly it turned out during development to the method of the invention that generation of superoxide anions is most efficient in an alkaline environment. Accordingly, in certain embodiments of the invention solution 1 is prepared and added to the substrate in a volume and concentration of the base suitable for generating an alkaline environment of a pH of more than 10.5, preferably more than 11, more preferably more than 11.5, most preferably more than 12. In embodiments, solution 1 is prepared and added to the substrate in a volume and concentration of the base suitable for generating an alkaline environment of a pH 12-14.

The hydrogen peroxide solution (solution 2 and/or solution 3) is prepared by dissolving hydrogen peroxide in water. Hydrogen peroxide is a chemical compound with the formula H₂O₂. In its pure form, it is a pale blue, clear liquid, slightly more viscous than water. Hydrogen peroxide is the simplest peroxide (a compound with an oxygen-oxygen single bond). In aqueous solutions hydrogen peroxide differs from the pure material due to the effects of hydrogen bonding between water and hydrogen peroxide molecules.

Preferably, the concentration of H₂O₂ in solution 2 is in the range of 10-50, 11-49, 12-48, 13-47, 14-46, 15-45, 16-44, 17-43, 18-42, 19-41, 20-40, 21-39, 22-38, 23-37, 24-36, 25-35, 26-34, 27-33, 28-32, 29-31 or 30 % (w/w) or (v/v).

In a preferred embodiment of the invention, the hydrogen peroxide concentration in solution 2 may be 30-35 % (w/w) or (v/v). Surprisingly, it was found that hydrogen peroxide concentrations of about 30-35 % in solution 2 and/or solution 3 are particularly efficient in the context of the present invention in degrading POPs contained by the substrates to be decontaminated. However, the concentration of hydrogen peroxide may be adjusted based on the respective substrate, POP and/or further reaction conditions of the respective case and can be suitably adjusted by a skilled person. In the context of the present invention, the term "case" refers to a particular situation, in which a specific contaminated substrate should be decontaminated by means of the present invention. A case may refer to a specific substrate in a specific amount and location comprising a certain contamination with a certain composition of one or more POPs, which should be decontaminated.

The efficiency of the degradation of POPs further depends on the additives and catalysts added at the different reaction stages and the physical conditions of the POPs, the substrate, the timing and fractionation of adding the reaction components to the substrate. A person skilled in the art is able to adjust the details of the method of the present invention based on the specific POP-contaminated substrate to be decontaminated and the specific case.

It is a particular advantage of the present invention that due to the addition of a hydrogen peroxide decomposition catalyst during the first and/or the second reaction stage it is possible to continue the decontamination process of the method of the invention by adding (after the second reaction stage) an aqueous solution of hydrogen peroxide. Because of the addition of the hydrogen peroxide decomposition catalyst during earlier reaction stages, the presence of such a catalyst will lead to the generation of superoxide during the third reaction stage, leading to the continued degradation of POPs and reaction by-products and leftover. Accordingly, the reaction can be continued by addition of hydrogen peroxide solution without any other additives until the desired result of the decontamination process of the invention has been achieved.

In preferred embodiments of the invention, the POP-contaminated substrate is soil. It is a particular advantage of this embodiment that it might not require the external addition of any catalyst because the components and chemicals already present in the soil may be act as a catalyst. For example, silicium dioxide, which is present in sandy soils, can act as a hydrogen peroxide decomposition catalyst and therefore the external addition of a further hydrogen peroxide decomposition catalysts can be reduced to very little amounts or may be even not necessary, depending of on the amounts of silicium dioxide present in the substrate.

Furthermore, it is an important advantage of the method of the invention that the substrate, such as for example soil, is not sterilized (meaning that the microorganisms present in the treated soil are not killed), but instead is not harmful to the soil microbiota. Therefore, the naturally occurring microbiome of the soil is at least partially maintained during the method of the invention. This is particularly advantageous because degradation products, reaction leftovers and by-products that may still be present after the performance of the method of the invention can be further degraded by the endogenously occurring microorganisms or microbiota of the soil. It was shown that after decontamination of soil by the method of the present invention the microorganisms of the soil recovered well. In particular, it was found that nitrobacteria and oligonitrophiles, which are both well known as contaminant-degrading microorganisms, were abundantly found in decontaminated soils and contributed to the full degradation of the reaction products. In preferred embodiments the present invention may additionally comprise the addition of nitrogen fertilizers to the substrate, since such fertilizer have been shown to contribute to the recovery of the soils microbiome after decontamination treatments.

Preferably, the amount of the hydrogen peroxide solution added during reaction stage 2 is not less the amount of the POP or contaminant present in or on the substrate. This means that, for example, when there is 1 kg of POP present in or on the contaminated substrate, at least 1 kg of 20-40 % hydrogen peroxide solution (solution 2) should be added to the substrate during reaction stage 2. Preferably, the amount of solution 2 added to the substrate is equal or lower than the amount of the substrate to be treated. For example, when treating 100 kg of contaminated substrate, the amount of solution 2 added to the substrate should not be higher than 100 kg of solution 2.

It is preferably that after the addition of one or more reaction components the contaminated substrate and the added reaction component(s) are incubated for a certain time, preferably 15-30 minutes, preferably while mixing or agitating the substrate with the added components.

Preferably, the one or more POPs in the substrate are selected from the group comprising polychlorinated hydrocarbons (PCHs), polycyclic aromatic hydrocarbons (PAHs), polychlorinated biphenyls (PCBs), chlorinated solvents, petroleum products and pharmaceutical leftovers. In further embodiments of the invention, POPs comprise all kinds of harmful hydrocarbons that are known to a skilled person.

It is a great advantage of the method of the invention that it is efficient in degrading and removing a great variety of contaminating POPs from substrates and is not limited to a certain subgroup or class. It is particularly advantageous that hazardous POPs such as PCHs, PAHs and PCBs, chlorinated solvents, petroleum products and pharmaceutical leftovers can be degraded by the method of the invention.

In a preferred embodiment of the invention, the base of basic solution 1 is a metal hydroxide (MOH) solution, preferably NaOH solution, wherein the concentration of MOH in solution 1 is in the range of 15 - 30 % (w/v) (3.75 - 7.5 M). It was shown that the method of the present invention is particularly efficient in degrading POPs from contaminated substrates when the basic solution was prepared by using a metal hydroxide, such as NaOH, for the preparation of solution 1. According to a further preferred embodiment of the invention, the base of basic solution 1 is a metal hydroxide (MOH) solution, preferably NaOH solution, wherein the concentration of MOH in solution 1 is adjusted to be in the range of 15 % - 30 % (w/v) (3.75 - 7.5 M) in a combined volume of solution 1 and solution 2.

Furthermore, it turned out that a concentration of metal hydroxide, preferably NaOH, in solution 1 or in a combined volume of solution 1 and solution 2 in the range of about 10-40, 11-39, 12-38, 13-37, 14-36, 15-35, 16-34, 17-33, 18-32, 19-31, 20-30, 21-29, 22-28, 23-27, 24-26 or 25 % (w/v) are particularly suited, since it is possible to generate an alkaline environment of about pH12-14 in the substrate after addition of solution 1. Furthermore, this alkaline environment can be maintained over the course of the method of the present invention. Concentrations in the range of 15-30 % (w/v) are preferred because the balance between degradation of POPs and survival of microbiota is particularly advantageous under such conditions.

In the context of the present invention, the term "alkaline environment" refers to the creation of an alkaline pH of 8 or more, preferably a pH of more than 10, 10.1, 10.2, 10.4, 10.5, 10.6, 10.7, 10.8, 10.9, 11, 11.1, 11.2, 11.4, 11.5, 11.6, 11.7, 11.8, 11.9, 12, 12.1, 12.2, 12.4, 12.5, 12.6, 12.7, 12.8, 12.9, 13, 13.1, 13.2, 13.4, 13.5, 13.6, 13.7, 13.8, 13.9, or a pH in the range of 12-14, in the reaction mixture of the method of the present invention. It preferably refers to the pH in the reaction mixture, which is generated by the addition of reaction components of the method of the invention to the contaminated substrate.

Preferably, the decontamination reaction of the method of the present invention is started by adding solution 1 to the contaminated substrate in an amount sufficient to create an alkaline environment, preferably of pH 12-14, in the reaction mixture. If possible, after the addition of solution 1 to the substrate, there is an incubation step of preferably at least 15-30 minutes, during which the substrate and solution 1 may be mixed. However, if mixing is not possible, a skilled person can adjust the method of the invention.

Preferably, the volume of solution 1 is sufficient to saturate the substrate and to generate an alkaline environment of pH 12-14. Depending on the reaction conditions, a skilled person can add a suitable volume of solution 1 that ensures that throughout the reaction mixture comprising the whole contaminated substrate to be decontaminated, an alkaline environment of pH 12-14 is generated. This means that, for example, in case of cleaning solid materials or surfaces, such as machine parts or gravel, the volume of solution 1 should be sufficient to cover all the contaminated surface of the solid objects to be decontaminated. In case of cleaning porous materials, such as for example soil, the volume of solution 1 should be adjusted to be sufficient to saturate, cover, soak, or surround the complete amount of soil to be decontaminated with solution 1 to ensure that in the whole reaction environment or reaction mixture comprising the complete substrate/soil to be decontaminated an alkaline environment is generated. It is an important advantage of the present invention that the method can be adjusted according to the respective reaction conditions of a specific case. In a preferred embodiment the contaminated substrate consists of POPs.

According to a preferred embodiment of the invention, the method comprises additionally a third reaction stage comprising adding to the substrate a hydrogen peroxide solution (solution 3). Preferably, solution 3 is identical to solution 2. However, it might be preferable that solution 3 has a different composition than solution 2, for example if solution 2 comprises further additives in addition to hydrogen peroxide. Preferably, the hydrogen peroxide concentration in solution 3 is in the same range as in solution 2. However, it might be advantageous to use a different hydrogen peroxide concentration that might be increased or decreased compared to solution 2. The hydrogen peroxide concentration may be adjusted to the specific reaction conditions and to the result of the previously performed reaction stages. In preferred embodiments, the contamination status of the substrate may be analysed between different reaction stages to decide whether the method should be continued with a further or repeated reaction stage.

Preferably, the concentration of hydrogen peroxide (H₂O₂) in solution 3 is in the range of 10-50, 11-49, 12-48, 13-47, 14-46, 15-45, 16-44, 17-43, 18-42, 19-41, 20-40, 21-39, 22-38, 23-37, 24-36, 25-35, 26-34, 27-33, 28-32, 29-31 or 30 % (w/w) or (v/v). Concentrations of 30-35 % are particularly preferred since it was observed that these concentrations lead to a highly efficient degradation of POPs and reaction leftovers or by-products of the previous reaction stages.

It is a great advantage of the method of the present invention that during the third reaction stage superoxide can be generated by adding solution 3, which may not comprise any further components or additives in addition to hydrogen peroxide. This is due to the fact that a hydrogen peroxide decomposition catalyst has been added to the reaction mixture during the previously performed first and/or second reaction stage(s). The hydrogen decomposition catalyst can catalyze the generation of superoxide, because as a catalyst it may not be consumed by the reaction but remains available for later reactions. Therefore, it is sufficient for the generation of hydrogen peroxide during reaction stage 3 that the hydrogen peroxide decomposition catalyst has been added in during an earlier reaction stage.

It is a further advantage, that it is possible to repeat reaction stage 3 several times in the context of the method of the present invention to generate more superoxide to ensure degradation of the POPs until the desired result is achieve without a requirement for adding additional amounts of hydrogen peroxide decomposition catalyst.

In preferred embodiments of the method of the invention the volume or weight of solution 2 and/or solution 3 is at least 50% of the volume or weight of solution 1. In further preferred embodiments the volume or weight of solution 2 and/or solution 3 is at least about 1, 2, 3, 4, 5, 6, 7, 8, 9, 10, 12, 14, 16, 18, 20, 22, 24, 26, 28, 30, 32, 36, 40, 44, 48, 52, 56, 60, 65, 70, 75, 80, 85, 90, 95 %, or at least about the same of the volume or weight of solution 1. In further embodiments of the invention the volume or weight of solution 2 and/or solution 3 may be at least about 105, 110, 115, 120, 125, 130, 135, 140, 150, 160, 170, 180, 190 or 200 % of the volume or weight of solution 1.

The total amount of solution 2 and/or solution 3 that are added during reaction stages 2 and 3, wherein these reaction stages may be repeated, can be determined by a skilled person for each specific case on the basis of the specific substrate and POP-contamination of the substrate and may be adjusted while performing the method on the basis of the result of the previous reaction stages of the method. Furthermore, the amount of solution 2 and/or 3 depends on the desired result of the method of the invention. For example, for complete degradation of the contaminating POPs higher amounts of solution 2 and/or 3 may be required as compared to the removal of the POPs by separation of POPs from the substrate.

In a preferred embodiment of the method, the respective amounts of solution 1, solution 2 and optionally solution 3 can be determined by a skilled person on the basis of the following example. For 1 part of the one or more POPs 3.7 - 4.3 parts of NaOH solution (solution 1) are added during reaction stage 2 and 10 parts of H₂O₂ solution (solution 2 and optionally 3) by mass (or by volume) are needed, wherein the concentration of NaOH in solution 1 is 15-30 % (w/v) and the concentration of hydrogen peroxide in solution 2 and optionally 3 is 30-35 % (v/v). Accordingly, it may be preferable that for the degradation of 1 kg of POPs comprised by a POP-contaminated substrate 3.7 - 4.3 kg of solution 1 and a combined amount of 10 kg of solution 2 and optionally solution 3 may be added during the different reaction stages of the method of invention. These amounts represent an example, which may have to be adjusted by the skilled person performing the method on the basis of the specific conditions under which the method is to be performed. The total amount of 10 kg of solution 2 and solution 3 may be divided in one, two, three, four, five or more fractions to be applied/added separately, preferably intermitted by an incubation period that may include a mixing step. These ratios provided in the example above could vary depending on POP-type, POP-percentage in the substrate, technological conditions, etc. This embodiment represents an example, which should serve as a basis for determining the best reaction conditions for each specific case of applying the method of the invention for the degradation of POPs present in a substrate, without being limiting for the present invention.

The addition of hydrogen peroxide solutions during the second and third reaction stages may be repeated several times. Importantly, H₂O₂ added during reaction step 2 and 3 decomposes resulting in the production of oxidative radicals, such as in particular superoxide, due to the presence of the hydrogen peroxide decomposition catalyst added during reaction stage 1 or 2.

In preferred embodiments of the method of the invention, the order of the reaction stages may be changed, for example due to the reaction conditions of the specific case. Furthermore, it may be advantageous to divide the addition of the total amount of solution 1 and/or solution 2 and/or solution 3 added during the respective reaction stages into sub-fractions that are added individually with time delays in between the individual additions to make the process more effective. The timing of the delays in reagents application could be defined referring to the specific conditions of the respective case.

In preferred embodiments or the present invention, the method comprises between the reaction stages or between the addition of fractions of the solution added during the respective reaction stages delays of 0.1 - 48 hours, preferably 0.2 to 24 hours, 0.25 to 18 hours, 0.3 to 12 hours, 0.4 to 8 hours, 0.5 to 6 hours, 0.6 to 5 hours, 0.7 to 4 hours, 0.8 to 3 hours, 0.9 to 2 hours or 1 hour. A delay of 0.25 to 1 hour may be particularly advantageous, because this would make it possible to perform the method of the present invention within less than one day, which might be particularly advantageous when performing the method in situ, where changes of the weather may interfere with performing the method of the invention, besides a reduction of costs that is associated with a time efficient performance of the method. A further advantage of time delays of at least 15 minutes is that gases generated during the respective reaction stage may have volatilized during this period. On the other hand, incubation periods of more than 1 hour may be advantageous to ensure that the reaction stage or a fraction of a reaction stage has been finalized through consumption of all reagents. In preferred embodiments, the total volume of solution 1, solution 2 and/or solution 3 is divided into fractions, wherein the fractions are added to the substrate sequentially with a delay before the addition of each consecutive fraction. It may further be preferred that the second and/or the third reaction stage are repeated at least once.

Preferably, the method of the invention is executed in the order of first performing the first reaction stage, then the second reaction and finally the third reaction stage. However, the order or the reaction stages can be changed and/or one or more individual reaction stages may be repeated in the context of the present invention. A person skilled in the art may adjust the method of the invention and the order and repetition of reaction stages depending on the specific case.

In a further preferred embodiment of the method of the invention, the transphase catalyst (TPC) is a polyhalogenated surfactant, more preferably a polyfluorinated surfactant.

A transphase catalyst, TPC, phase-transfer catalyst or PTC is a catalyst that facilitates the migration of a reactant from one phase into another phase where reaction occurs. This process is also called phase-transfer catalysis and is a special form of heterogeneous catalysis. Ionic reactants are often soluble in an aqueous phase but insoluble in an organic phase in the absence of the phase-transfer catalyst. The catalyst functions like a detergent for solubilizing the salts or ionic reactants from the aqueous phase into the organic phase. In the context of the present invention, phase-transfer catalysis by means of one or more TPC may enable the acceleration of the reaction upon the addition of the TPC. By using a TPC, it is possible to achieve faster reactions, obtain higher conversions and/or yields, make fewer by-products, and eliminate the need for expensive or dangerous solvents that will dissolve all the reactants in one phase, eliminate the need for expensive raw materials and/or minimize waste problems.

The use TPC in the context of the present invention is particularly preferred, because during the different reaction stage aqueous solutions are added to the contaminated substrate. However, many POPs, which are mostly long hydrocarbon molecules, are not soluble in aqueous solutions and may therefore not be fully accessible to the reagents added during the method of the invention. This problem can be overcome by the use of one or more suitable TPC.

TPCs are often quaternary ammonium salts, and important examples of TPCs catalysts include, without limitation, benzyltriethylammonium chloride, methyltricaprylammonium chloride, methyltributylammonium chloride, and methyltrioctylammonium chloride and organic phosphonium salts, such as hexadecyltributylphosphonium bromide. Preferred TPC to be used in the context of the present invention comprise, without limitation, polyhalogenated or polyfluorinated surfactants, because they have on the one hand a high chemical stability in superoxidative reactions, and on the other hand are not hazardous or toxic and are therefore environmentally friendly, which is particularly preferred in the context of the present invention.

In the context of the method of the present invention, the use of a TPC that is a polyhalogenated hydrocarbon or polyhalogenated surfactant, more preferably a polyfluorinated hydrocarbon or polyhalogenated surfactant, is particularly preferred because such TPC are stable in the presence of superoxide anions and/or under conditions of superoxidation. This is a particular advantage of polyhalogenated and specifically polyfluorinated TPC compared to many other TPC used in oxidation based remediation methods that they are stable in the presence of oxidative conditions and in particular in the presence of superoxide, because oxidation is taking place during such methods leading to the decrease of the activity of TPC that are not polyhalogenated or polyfluorinated.

The term "surfactant" refers to compounds that lower the surface tension (or interfacial tension) between two liquids or between a liquid and a solid. Surfactants may act as detergents, wetting agents, emulsifiers, foaming agents, and dispersants. Surfactants are usually organic compounds that are amphiphilic, meaning they contain both hydrophobic groups (their tails) and hydrophilic groups (their heads). Therefore, a surfactant contains both a water-insoluble (or oil-soluble) component and a water-soluble component. Surfactants will diffuse in water and adsorb at interfaces between air and water or at the interface between oil and water, in the case where water is mixed with oil. The water-insoluble hydrophobic group may extend out of the bulk water phase, into the air or into the oil phase, while the water-soluble head group remains in the water phase.

Preferably, the one or more transphase catalyst (TPC) used in the context of the present invention belongs to the group of stable polyhalogenated surfactants, more preferably a polyfluorinated single tailed or poly-tailed hydrocarbon substance. Such TPC highly improve the interaction between oily and water phase and are stable in conditions of the method of the present invention comprising superoxidation.

Experimental results showed, that the use of the TPC TIVIDA 2300 provided by the company Merck was particularly advantageous.

A TPC according to the formula 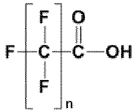 is particularly preferred in the context of the present invention.

It should be noted that the TPC could be applied as the additive during the first reaction stage and/or the second reaction stage. The TPC may be added to solution 1 or solution 2 before addition of the respective solution to the substrate. Alternatively, the TPC may be added to the substrate individually, either in solid form or solved in water. It is preferred, that TPC is added during the first reaction stage.

In a further embodiment of the present invention, the TPC concentration in a combined volume of solution 1 and solution 2 is in a range of 0.001 - 10 %, preferably 0.005 % (w/v) or (v/v). Furthermore, the concentration of the TPC, such as polyhalogenated or polyfluorinated surfactants and in particular TIVIDA 2300, may be in the range of 0.001 - 10 % (w/v), preferably 0.002 - 9, 0.003 - 8, 0.004 - 7, 0.005 - 6, 0.005 - 5, 0.006 - 4, 0.007 - 3, 0.008 - 2, 0.009 - 1, 0.01 - 0.9, 0.02 - 0.8, 0.03 - 0.7, 0.04 - 0.6, 0.05 - 0.5, 0.06 - 0.4, 0.07 - 0.3, 0.08 - 0.2 or 0.09 - 0.1 % (w/v) or (v/v) in the combined volume of solution 1 and solution 2.

A concentration of the TPC of about 0.005 % is particularly preferred, since it was determined that this concentration enables a very efficient degradation of POPs in the context of the present invention, although the amount of the TPC is very low and therefore beneficial because only these small amounts remain in the substrate after the method of the present invention has been performed.

According to a further preferred embodiment of the present invention, the hydrogen peroxide dissociation catalyst is a manganese (Mn) containing catalyst, preferably MnO, MnO₂ or KMnO₄.

Hydrogen peroxide is thermodynamically unstable and dissociates (or decomposes) to form water and oxygen according to the formula 2 H₂O₂ → 2 H₂O + O₂. The rate of decomposition increases with rising temperature, concentration and pH. Decomposition is catalysed by various compounds known to the person skilled in the art, including most transition metals and their compounds (e.g. manganese dioxide, silver, and platinum). Certain metal ions, such as Fe²⁺ or Ti³⁺, can cause the decomposition to take a different path, with free radicals such as (HO-), (HOO-) and superoxide (O₂-) being formed. Non-metallic catalysts include potassium iodide, which reacts particularly rapidly and forms the basis of the elephant toothpaste experiment.

It was entirely surprising that in the context of the present invention in the presence of an alkaline environment it is possible to decompose or dissociate the hydrogen peroxide comprised by solution 2 and optionally 3 to dissociate to form superoxide anions in the presence of a hydrogen peroxide dissociation catalyst. Hydrogen peroxide dissociation catalysts that may be used in the context of the present invention comprise, without limitation, metal oxides and metal salts, preferably of the metals Ag, Fe, Cu, Co, Cr, Pb, and, most preferably, Mn, such as for example MnO, MnO₂ or KMnO₄ and others.

Surprisingly, it was found that dissociation of hydrogen peroxide into superoxide was particularly efficient when manganese-containing catalysts, such as MnO, MnO₂ or KMnO₄, are added to during the method of the present invention. However, the hydrogen peroxide dissociation catalysts that may be used in the context of the present invention are not limited to these manganese-containing catalysts but comprise all hydrogen peroxide dissociation (decomposition) catalysts known to a person skilled in the art. The selection of the specific hydrogen peroxide dissociation catalyst may be based on the specific situation in which the method of the present invention should be performed and may depend on the various parameters discussed herein, such as the substrate, the kind and amount of contaminating POPs and performance of the method in situ or ex situ.

It is an advantage of the manganese containing catalysts used in the context of the present invention that they are regarded as beneficial for the propagation and recovery of soil microbiota that are involved in the degradation of POPs and reaction leftovers generated during chemical degradation of POPs. Therefore, it is an important advantage of embodiments of the present invention that the manganese containing hydrogen peroxide dissociation catalysts that remain in the substrate, such a soil, after performing of the method of the invention and promote the establishment and recovery of microbiota in the soil that can degrade eventual leftovers of partially degraded POPs.

Preferred hydrogen peroxide dissociation catalysts used in the method of the invention comprise, without limitation, Mn-oxides or other metal-oxides in general. Preferably, a hydrogen peroxide dissociation catalyst, such as MnO₂, is added as a colloid solution in water directly to solution 1 and/or solution 2 before adding the respective solution to the substrate during the corresponding reaction stage. Alternatively, the hydrogen peroxide dissociation catalysts may be added separately in solid form or solved in water directly to the substrate, preferably during the first or the second reaction stage.

In preferred embodiments of the present invention, the concentration of the hydrogen peroxide dissociation catalyst in a combined volume of solution 1 and solution 2 is in a range of 0.001 - 10 %, preferably 0.05 % (w/v).

Suitable concentrations of the catalyst are in the range of 0.001 - 0.01 % (w/v), preferably 0.005 % of the combined volume of solution 1 and solution 2. In a preferred embodiment of the invention, the hydrogen peroxide dissociation catalyst concentration in a combined volume of solution 1 and solution 2 is in a range of 0.001 - 0.01 %, preferably 0.005 % (w/v).

Further suitable concentrations of the catalyst are in the range of 0.001 - 0.1 % (w/v), preferably 0.05 % of the combined volume of solution 1 and solution 2. In a preferred embodiment of the invention, the hydrogen peroxide dissociation catalyst concentration in a combined volume of solution 1 and solution 2 is in a range of 0.001 - 0.01 %, preferably 0.05 % (w/v).

Furthermore, the hydrogen peroxide dissociation catalyst concentration in a combined volume of solution 1 and solution 2 may be in a range of 0.001 - 10 % (w/v), preferably 0.002 - 9, 0.003 - 8, 0.004 - 7, 0.005 - 6, 0.005 - 5, 0.006 - 4, 0.007 - 3, 0.008 - 2, 0.009 - 1, 0.01 - 0.9, 0.02 - 0.8, 0.03 - 0.7, 0.04 - 0.6, 0.05 - 0.5, 0.06 - 0.4, 0.07 - 0.3, 0.08 - 0.2 or 0.09 - 0.1 % (w/v) in the combined volume of solution 1 and solution 2.

In preferred embodiments of the present invention, the additives of the first and/or second reaction stage additionally comprise a foam forming agent, preferably selected from the group comprising industrial surfactants, non-ionic surfactants, ionic surfactants, polyfluorinated surfactants and detergents, wherein the concentration of the foam forming agent in a combined volume of solution 1 and solution 2 is in a range of 0.001 - 10 %, preferably 0.05 % (w/v) or (v/v). Furthermore, the concentration of the foam forming agent in a combined volume of solution 1 and solution 2 may be in a range of 0.001 - 10 % (w/v) or (v/v), preferably 0.002 - 9, 0.003 - 8, 0.004 - 7, 0.005 - 6, 0.005 - 5, 0.006 - 4, 0.007 - 3, 0.008 - 2, 0.009 - 1, 0.01 - 0.9, 0.02 - 0.8, 0.03 - 0.7, 0.04 - 0.6, 0.05 - 0.5, 0.06 - 0.4, 0.07 - 0.3, 0.08 - 0.2 or 0.09 - 0.1 % in the combined volume of solution 1 and solution 2.

The addition of foam forming agents to solution 1 and/or solution 2 may be particularly advantageous when the substrate is a solid, non-porous material, object or surface that cannot absorb the liquid solutions. By using foam forming agents it is possible for the solutions to remain on such solid, non-absorbing solid surfaces for prolonged periods without flowing off immediately. This prolongs the contact between the solutions (and the reagents provided therein) and the POP-contaminated substrate, which allows a more efficient degradation of the POPs. Accordingly, a stronger decontamination effect is achieved.

In a preferred embodiment of the invention, the additives of the first and/or second reaction stage additionally comprise a gelation agent, including natural origin gelation agents, synthetic gelation agents, and other industrial densifiers wherein the concentration of the gelation agent in a combined volume of solution 1 and solution 2 is in a range of 0.001 - 10 %, preferably 0.15 % (w/v). According to this embodiment, a gelation agent can be added to the substrate in the first and/or the second reaction stage.

The gelation agent is preferably selected from the group comprising, without limitation, natural origin gelation agents, synthetic gelation agents, and other industrial densifiers, such as xanthan gum, guar gum and carboxymethylcellulose among others. The skilled person is able to select suitable gelation agents to be used in the context of the present invention.

Preferably, the concentration of the gelation agent in a combined volume of solution 1 and solution 2 is in a range of 0.001 - 10 %, preferably 0.15 % (w/v) or (v/v). Furthermore, the concentration of the gelation agent in a combined volume of solution 1 and solution 2 may be in a range of 0.001 - 10 % (w/v) or (v/v), preferably 0.002 - 9, 0.003 - 8, 0.004 - 7, 0.005 - 6, 0.005 - 5, 0.006 - 4, 0.007 - 3, 0.008 - 2, 0.009 - 1, 0.01 - 0.9, 0.02 - 0.8, 0.03 - 0.7, 0.04 - 0.6, 0.05 -0.5, 0.06-0.4, 0.07-0.3, 0.08-0.25, 0.09- 0.22, 0.1 - 0.21, 0.11 - 0.2, 0.12 - 0.19, 0.13 - 0.18, 0.14 - 0.17 or 0.15 - 0.16 % in the combined volume of solution 1 and solution 2.

The addition of gelation agents to solution 1 and/or solution 2 may be particularly advantageous when the substrate is a solid, non-porous material, object or surface that demonstrate inappropriate adhesion for solutions 1 and 2, or when the reaction demonstrates inappropriate kinetics, e.g. reaction process is characterized by too fast consumption of one of the solutions, unbalancing the reaction stoichiometry. By using gelation agents, the reaction kinetics in the direct substrate/ reaction medium could be modified to the appropriate indexes, optimal for the decontamination process. Furthermore, the use of gelation agents enables adhesion of the solutions to the substrate, for example allows the solutions to remain on a non-absorbing solid surface for prolonged periods without flowing off immediately. This prolongs the contact between the solutions (and the reagents provided therein) and the POP-contaminated substrate, which allows a more efficient degradation of the POPs. Accordingly, a stronger decontamination effect is achieved.

In the context of the present invention, the terms gelation agent, gelling agent, solidifiers, thickener, thickening agent, densifying agent of densifier are used synonymously. A gelation agent is a substance, which can increase the viscosity of a liquid without substantially changing its other properties. Edible gelation agents are commonly used in the chemical industry, for example in paints, inks or explosives, but also in other industries including cosmetics and food. Gelation agents may improve the suspension of other ingredients or emulsions, which increases the stability of the product or solution. Gelation agents can lead to forming a gel by a solution, dissolving in the liquid phase as a colloid mixture that forms a weakly cohesive internal structure. Some gelation agents act as mechanical thixotropic additives with discrete particles adhering or interlocking to resist strain.

Typical gelation agents include natural gums, starches, pectins, agar-agar and gelatin. Often they are based on polysaccharides or proteins. Gelation agents that may be used in the context of the present invention include, without limitation, natural origin gelation agents, synthetic gelation agents, and other industrial densifiers. Non-limiting examples of such gelation agents include xanthan gum, guar gum, carboxymethylcellulose, nitrocellulose and other nitro esters, aluminium salts of fatty acids, polystyrene, alginic acid, sodium alginate, potassium alginate, ammonium alginate, calcium alginate, polysaccharides from brown algae, agar, carrageenan, locust bean gum, pectin, gelatin, polyethylene glycol, synthetic polymers such as polyacrylic acid, or vegetable gums.

In alternative embodiments of the method of the invention, the additives are added to the solutions before or during addition of the solution to the substrate, or the additives are added to the substrate separately, preferably solved in water. Preferably, the additives are added during or in the first reaction stage.

In preferred embodiments of the present invention, the substrate is selected from the group comprising porous solid substrates, such as soils and sand, surface solid substrates, such as gravel and solid surfaces, and liquid substrates, such as mineral oil. In the context of the present invention, as possible substrates could be considered porous solid materials, such as soils and sand; surface solid materials, such as gravel, different solid surfaces or an arenaceous non-porous substrate; and liquid, such as for example mineral oils used in electrical facilities.

In preferred embodiments of the present invention, the substrate is a solid surface substrate or arenaceous non-porous substrate and the first reaction stage comprises the addition of a foam forming agent, preferably comprised in solution 1, wherein the concentration of the foam forming agent in a combined volume of solution 1 and solution 2 is in a range of 0.001 - 10 %, preferably 0.05 % (w/v) or (v/v). According to a further embodiment, the substrate is gravel and the volume of solution 1 is about 5 - 40 %, preferably 20 - 30 % of the gravel volume.

In certain embodiments of the invention, the method is carried out as an *in-situ* method. This means that the substrate is treated according to the method of the invention at the site and under the given conditions without moving or transferring the substrate to a different location.

For example, contaminated soil may be treated without removing the contaminated substrate from the ground. The method can be performed by applying the solutions and reagents of the method of the invention directly to the surface, so the superficial POPs will get immediately exposed to the solutions. Furthermore, the solutions will penetrate the soil, so it will be soaked with the respective solutions that may also comprise one or more additives. Furthermore, it is possible to inject the solutions into the soil at certain locations, to also efficiently enable reaching POP-contaminations that are not located near the surface. An alternative in situ application of the method of the invention is the cleaning of railway tracks and the gravel that is located in the track bed. Further in situ applications of the method of the present invention are obvious to a skilled person in light of the described examples.

In alternative embodiments of the invention, the method is carried out as an *ex-situ* method in a chemical reactor or a mixing mode reactor, preferably a close-loop system reactor. In ex-situ embodiments of the invention, the contaminated substrates are removed from their normal or initial location and may be transferred to different location where the method of the invention is performed. Preferably, in the ex situ mode the method of the invention is performed in a chemical reactor, which may be any kind of reaction tube, ranging from a capacity of less than one millilitre (ml) or one gram to several cubic meters or tons of substrate. Preferably, it is possible to control the reaction temperature and the reaction pressure in such a reactor. Furthermore, it may be possible to mix or agitate the substrate and the added solutions and additives during the method of the present invention. Such ex situ embodiments of the method of the present invention are advantageous, because increased reaction temperature, agitation of the reaction mixture and increased reaction pressure enable a more efficient degradation of the POPs.

In preferred embodiments of the method of the present invention performed ex situ, the combined volume of solution 1 and solution 2 is increased by 15 - 40 %, preferably 25 % as compared to the minimum combined volume of solution 1 and solution 2 according to the present invention. The minimum volume of solution 1 may be sufficient to saturate the substrate and to generate an alkali environment, and the minimum volume of solution 2 is at least 1 %, preferably 10 %, more preferably 50 % of the volume of solution 1. Increasing the combined volume of solution 1 and/or solution 2 in the method of the invention in an ex situ situation is beneficial, because a surplus of the reaction components can ensure a more efficient degradation of the POPs. Furthermore, it is possible to remove remaining reagents from the substrate after performing the method of the invention.

In preferred embodiments of the invention, the first, second and/or third reaction stage are carried out at a temperature of more than 25°C, preferably 45°C, most preferably at more than 80 °C, and/or at a pressure of more than 1000 hPa, preferably 1200 - 7000 hPa, most preferably at 7000 hPa. Preferably, such embodiments are carried out at a temperature of more than 25 °C, preferably 45 °C, most preferably at more than 80 °C, and/or at a pressure of more than 1000 hPa, preferably 1200 - 7000 hPa, most preferably at 7000 hPa, are ex situ methods that are preferably carried out in a chemical reactor, such as a tightly closed reactor, preferably a close-loop system reactor.

Preferably, the method of the present invention should not be performed at temperatures below 0 °C or at pressures that are below about 1000 hPa. However, it is possible to perform the method of the present invention, even as an in situ method, when the temperature of the environment is below 0 °C, wherein the solutions added to the substrate during the method of the present invention are higher than 0 °C, preferably, about 25 °C or more. This would possibly lead to an increase of the reaction temperature to above 0 °C, since the cold substrate would be warmed up by addition of the warmer solutions during the different reaction stages of the method.

In preferred embodiments of the invention, the substrate is a liquid substrate, preferably mineral oil, and the first reaction stage comprises the addition of a polyfluorinated TPC, wherein the concentration of the polyfluorinated TPC in a combined volume of solution 1 and solution 2 is in a range of 0.001 - 10 %, preferably 0.005 %. Such embodiments may be carried out as an ex situ method, preferably in a closed reactor system, such as a close-loop reactor that enables performing the method under controllable increased temperatures and pressures. Improved performance of the method for the removal, separation or degradation of POPs present in mineral oil can be achieved with high temperature and high pressure, such as temperatures of more than 25°C, preferably 45°C or higher, and/or a pressure not less than atmospheric, preferably higher than 1013 hPa.

According to a further embodiment of the present invention, the POPs consist predominantly of PCBs, and
- the method is performed ex situ in a close-loop system reactor,
- the first, second and/or third reaction stage are carried out at a temperature of more than 25°C, preferably 45°C, most preferably at more than 80 °C, and
- the first, second and/or third reaction stage are carried out at a pressure of more than 1000 hPa, preferably 1200 - 7000 hPa, most preferably at 7000 hPa.,

Preferably, the method is carried out in combination with other remediation methods, such as bioremediation. Further remediation methods comprise thermal desorption, thermal destruction (incineration), soil washing, biological remediation and/or vacuum extraction, chemical oxidation, chemical treatment (such as solvent extraction), photocatalysis, electrochemical treatment or bioremediation. In general, remediation refers to a process of degrading or removing contaminants or POPs from a substrate. In the context of the invention, the terms POP, pollutant and contaminant are used interchangeably.

The method of the present invention is particularly efficient when it is performed in a closed reactor system, such as a close-loop system reactor, or in combination with other remediation methods, such as bioremediation.

When performing the method of the present invention in combination with bioremediation, the method of the invention may be performed before bioremediation to rapidly pre-process or partially degrade the most toxic and permeable pollutants or POPs, such as PAHs and fluorinated hydrocarbons, into less- or non-hazardous leftovers that are highly available to biological remediation processes.

It is a great advantage of the present invention that decontaminated soil, which underwent the method of the present invention, can be used as biocompost. Furthermore, the method of the present invention may be performed in combination with bioremediation, wherein the method is preformed subsequently to a bioremediation process to degrade the contaminants or contaminant leftovers that could not be degraded by microorganisms. In that case microorganism inoculation would be performed on the native contaminated soil before performing the method of the present invention. It was entirely surprising that the combination of bioremediation and the method of the present invention can lead to a complete degradation of the POPs present in contaminated soil. Furthermore, it was not expected that after remediation by the combination of the two methods the soil is more fertile than before the contamination event, representing a surprising synergistic effect of the two methods.

In preferred embodiments of the present invention, the POPs or contaminants are not destroyed entirely, but are separated from the substrate for further processing after separation and isolation. In such embodiments, the reagent quantities and the number or reaction stages are low. Preferably no third reaction stage is performed and the volumes of the solutions of the reaction stages and the concentrations of the reagents therein are also comparably low. Such methods of separating and isolating the POPs from the substrate are preferably performed as ex situ methods, preferably in a reactor, as this allows a simpler separation and isolation of the POPs after the reaction stages are finished, for example by filtering the substrate.

In a preferred embodiment of the method of the invention, the POPs are removed, separated and/or isolated from the contaminated substrate for downstream processing of the isolated POPs. In such embodiments, the POPs are preferably crude oil spills present in sandy substrates and the method may be carried out at 25°C, wherein preferably only the first and the second reaction stage are performed and the minimum volumes of solution 1 and 2 comprising low reaction concentrations are added to the substrate. In such a case of performing the method as a low-destructive method for isolation of the POPs from the substrate, the reagent quantities and stage number could be lowered, so that the resulting mild oxidation would not completely destroy or degrade the POPs, but just leads to a lower adhesion of the POPs to the substrate, leading to a detachment of the POPs that can subsequently be separate.

Preferably, the present invention relates to a method for removal, separation or degradation of one or more persistent organic pollutant(s) (POPs) present in a substrate, the method comprising
- provision of a POP-contaminated substrate,
- a first reaction stage comprising
   i. adding to the substrate a basic solution (solution 1), and optionally one or more additives selected from the group comprising a transphase catalyst (TPC) and a hydrogen peroxide dissociation catalyst, and
   ii. incubating the substrate with solution 1 and optionally the one or more additives for at least 15 minutes, and
- a second reaction stage comprising adding to the substrate a hydrogen peroxide solution (solution 2) and optionally one or more additives selected from the group comprising a TPC and a hydrogen peroxide dissociation catalyst,
- wherein
   i. a hydrogen peroxide dissociation catalyst and a TPC are added during the first and/or the second reaction stage
   ii. the TPC is a polyhalogenated surfactant, more preferably a polyfluorinated surfactant, and/or the concentration of the TPC in a combined volume of solution 1 and solution 2 is in a range of 0.001 - 10 %, preferably 0.005 % (w/v),
   iii. the hydrogen peroxide dissociation catalyst is a manganese (Mn) containing catalyst, preferably MnO, MnO₂ or KMnO₄, and/or the concentration of the hydrogen peroxide dissociation catalyst in a combined volume of solution 1 and solution 2 is in a range of 0,001 - 0.10 % (w/v), preferably 0.05 % (w/v).

### DETAILED DESCRIPTION OF THE INVENTION

### Figures

The invention is further described by the following figures. These are not intended to limit the scope of the invention, but represent preferred embodiments of aspects of the invention provided for greater illustration of the invention described herein.

### Brief description of the figures:

Figure 1: Reaction stage 1 (corresponding to *technology of comparison*).
Figure 2: Reaction stage 2 as disclosed herein represents an improvement of the technology of comparison.
Figure 3: Railway lubricant grease decontamination.
Figure 4: Railway lubricant oil decontamination.
Figure 5: Octane decontamination.
Figure 6: UV spectra.
Figure 7: GC MS chromatograms.

### Detailed description of the figures:

**Fig. 1****.** The reaction could be subdivided into two parts, where both of them are well known in chemistry: *- reaction for the industrial scale hydrogen peroxide production, **- Algar-Flynn-Oyamada reaction, well known in art for an oxidative cyclization. The feature of the reaction is that in scaled up conditions the prevalent oxidative radical becomes hydroperoxide anion [•OOH], instead of superoxide [O•], which was declared as the main active agent for the process. In this case, referring to the UV and IR analysis data only about 20% HC breakdown to CO₂, where about 80% of initial contaminant becomes stable or unstable oxides, with unpredictable stability in the natural environment and hazard classes. Moreover, NaOH surplus, present in the reaction environment due to the basic protocol, could become a valuable factor for the cyclized forms stabilization.

Furthermore, the Algar-Flynn-Oyamada reaction that could be considered as the core of the technology could be described by the equation provided below:

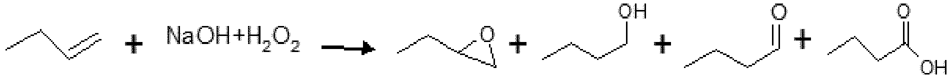

**Fig. 2****.** This reaction operates with superoxide anion O•, and oxidizes leftovers after the 1st stage, wherein the leftovers without oxidation may become stable and possess harmful properties: cyclized epoxides of HC could become PAHs that are highly dangerous for the environment. The provided reaction enables to transform the majority of the oxides to CO₂, bringing it back to the oxidative cycle of the technology of comparison reaction. Herein, the reaction could be described by the equation: CₙHₙ+CₙH₂ₙ+CₙH₂ₙ₊₂+ NaOH+H₂O₂ → CO₂+Na₂CO₃+H₂O

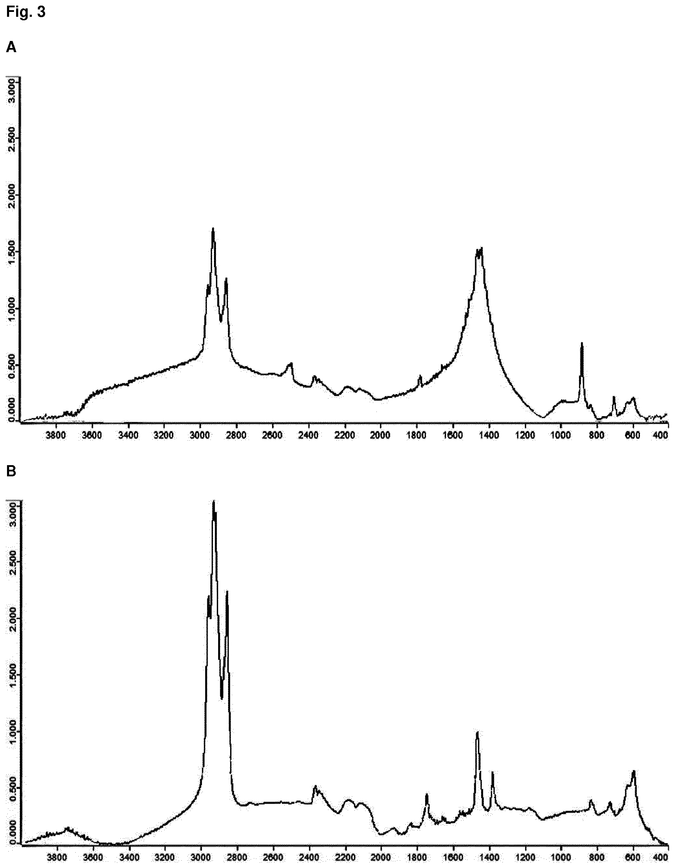

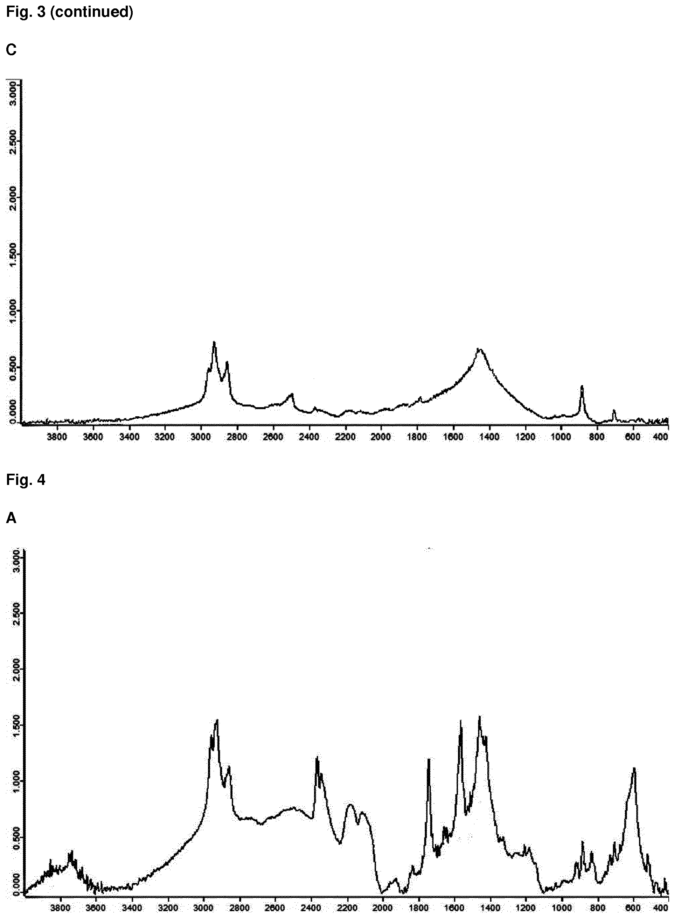

**Fig. 3****.** (A) 1% initial grease contamination. (B) *Technology of comparison* method performance. (C) Performance of method of the invention.

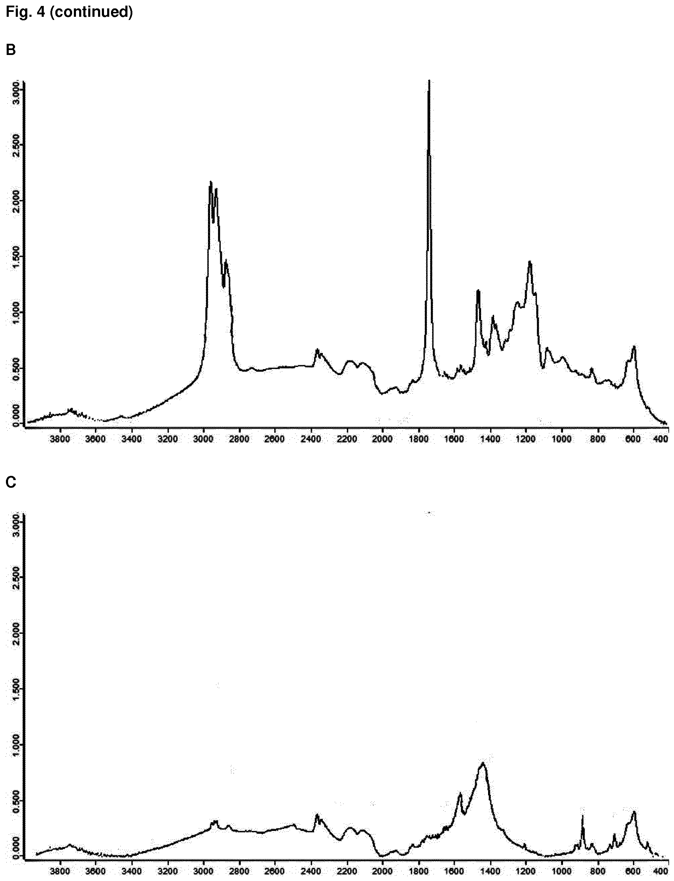

**Fig. 4****.** (A) 1% initial oil contamination. (B) *Technology of comparison* method performance. (C) Performance of method of the invention.

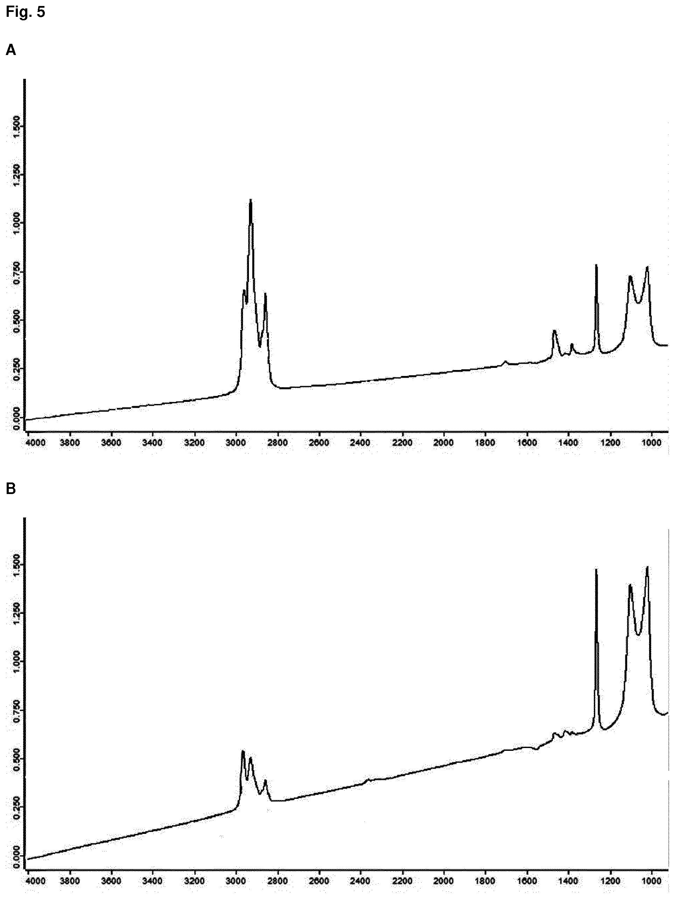

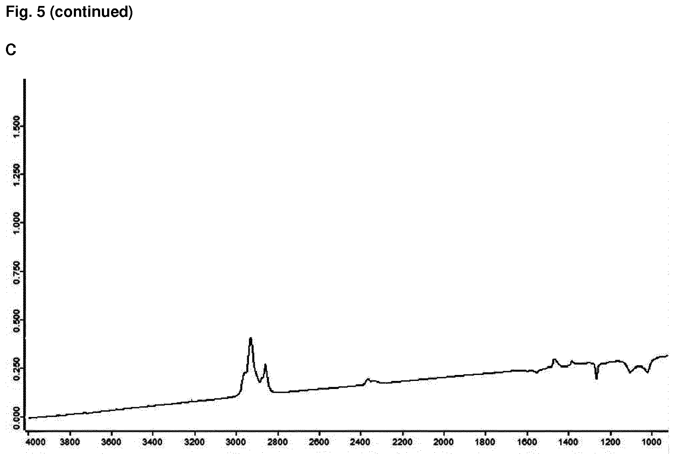

**Fig. 5****.** (A) 1% initial octane contamination. (B) *Technology of comparison* method performance. (C) Performance of method of the invention.

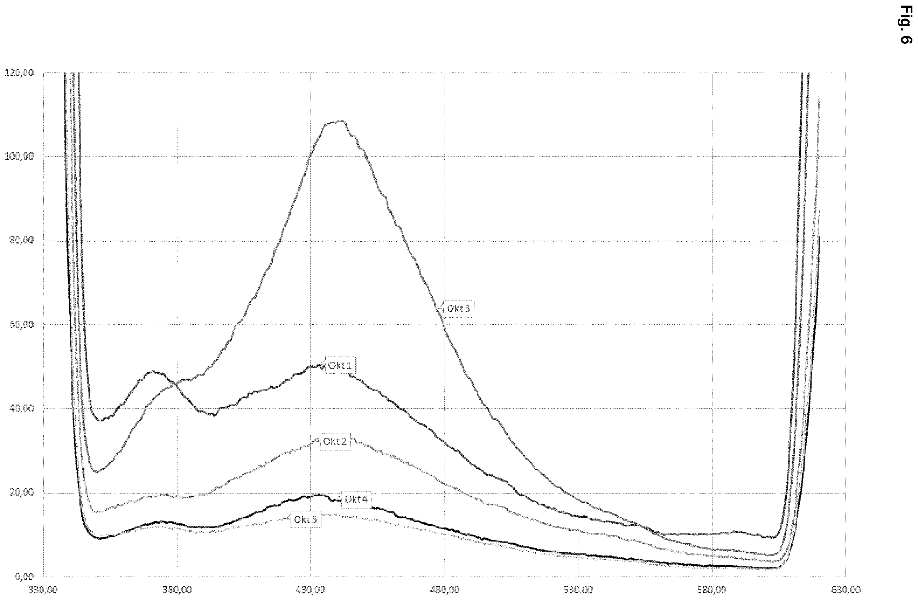

**Fig. 6****.** Octane contaminated samples were analyzed after treatment with a method according to the *technology of comparison* (Okt1), the *technology of comparison* including the use of a transphase catalyzer as described (Okt2, Okt3) and the method of the present invention (Okt4). An untreated sample (Okt5) represents the initial octane contamination.

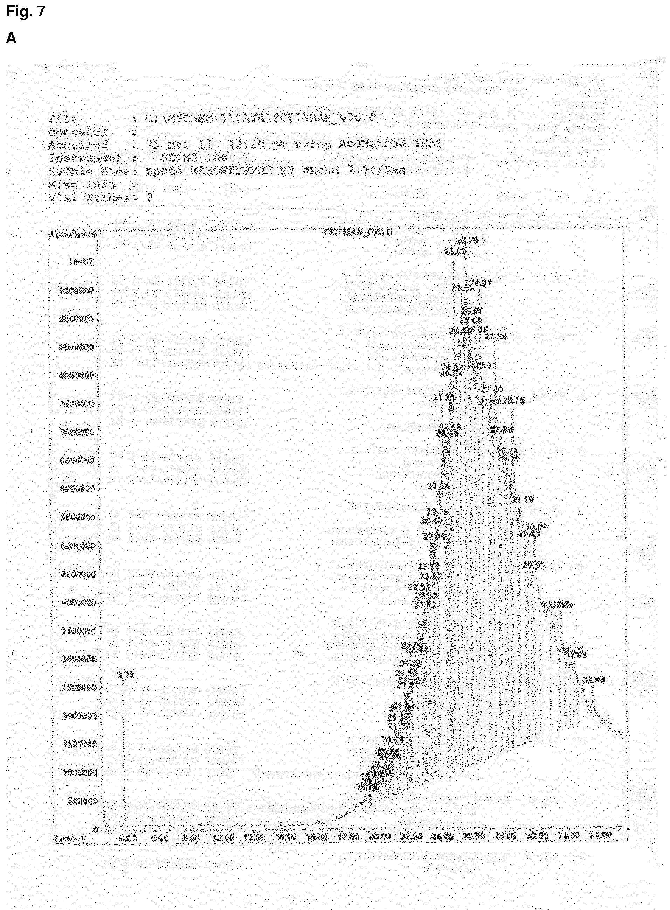

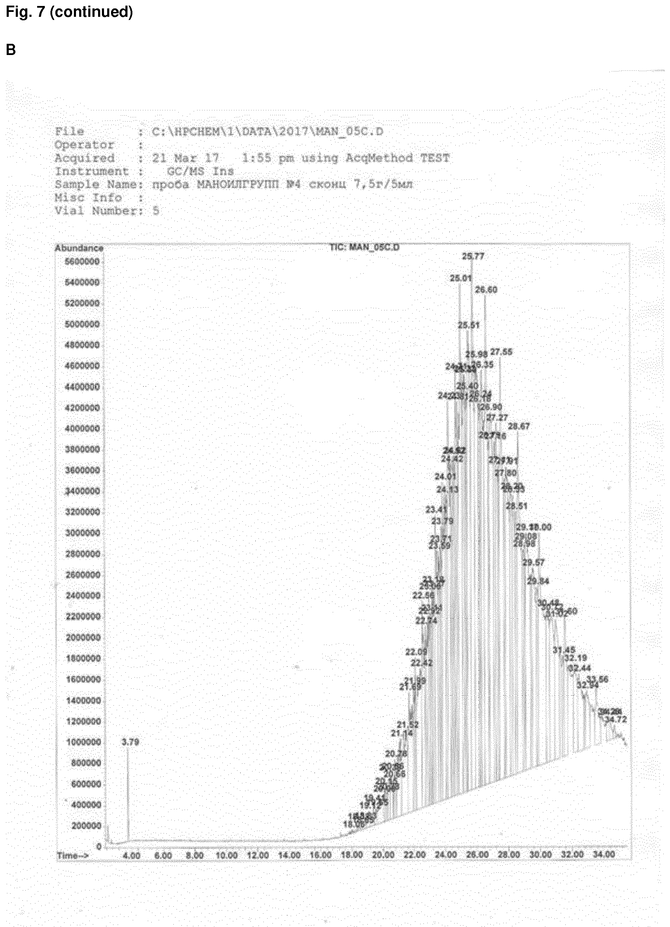

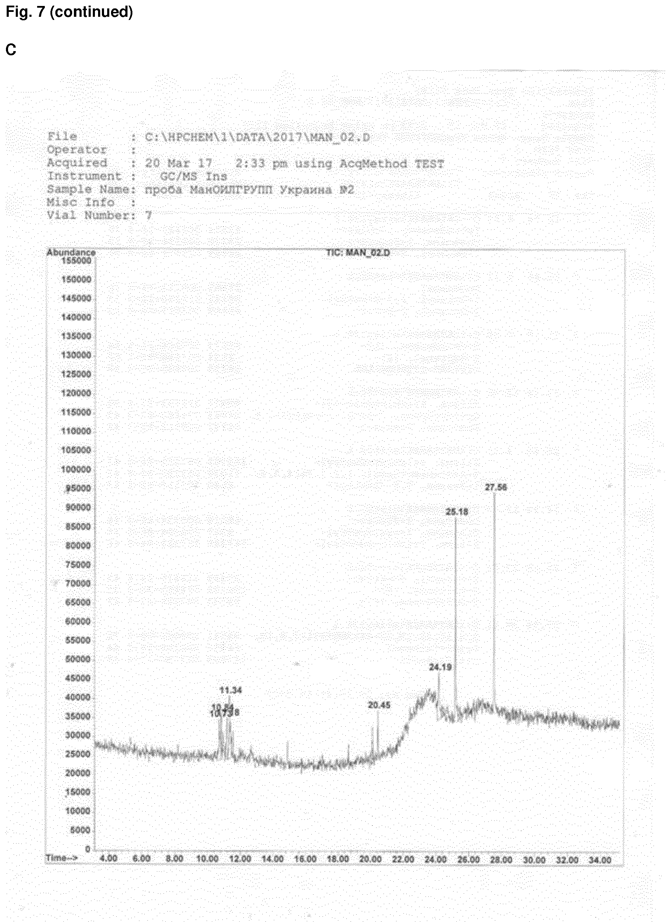

**Fig. 7****.** The chromatograms of (A) and (B) (Samples #3 and 5 respectively) represent the initial sample state (A) and HC decline after performing the method of the *technology of comparison* (B). Chromatogram (C) shows the result of treating a sample according to the method of the present invention (Sample #7).

### Examples

The invention is further described by the following examples. These are not intended to limit the scope of the invention, but represent preferred embodiments of aspects of the invention provided for greater illustration of the invention described herein.

### Materials:

- Reagent A (NaOH)
- Reagent B (H₂O2)
- Tivida 2300 (obtained from Merck)
- MnO₂ colloid water solution (1g/10kg) or dispersion of MnO₂ as powder in water
- Oil and oil products obtained from Lisichansk refinery
- Railway grease and oil lubricants obtained from Deutsche Bahn
- Octane

### Measurements:

The measurements demonstrating the efficiency and feasibility of the method of the present invention and comparing it with the technology of comparison were provided by different types of analyses, including GC MS, UV-Vis and FTIR. Results of the measurements are fully represented in *Figure 3-7* and *Examples 12-14.*

### Example 1: In vitro test.

The technology was tested in the test tubes in laboratory conditions, where the test provided could also be implemented for rapid performance evaluation, as a test system, or for demonstrative functions.

For the experiment 1 g of the contaminated substrate was used (in case for 10% wt. contamination - needed to add 100 mg of oil or other colored oily pollutant to 1 gram of quartz sand).

Into the tube 50 mg NaOH + 300 mg H₂O were added, and thoroughly mixed for 15 minutes. In result, NaOH concentration should not be lower than 15% (3.75 M). The highest NaOH concentration for the case should not exceed 30% (7.5M).
1. Adding basic solution (solution 1): NaOH (e.g. 15-30%) in quantities not more than 0,32 ml (0,37-0,43 g) for 1g 10% contaminated soil and wait for 15 minutes;
2. TPC Introduction: Add 5 µl or 5 mg (or 0.005%) of TPC (e.g. Tivida 2300), then mix;
3. Introduction of hydrogen peroxide / H₂O₂ solution (solution 2): Add 0.5 ml (0.5 g) of H₂O₂ - 35% Vol., mix thoroughly, wait for 15 minutes.
4. Introducing of superoxide production re-activator (MnO₂): Add couple of drops (100 µl (mg)) MnO₂ colloid (water solution), mix, and wait for 15 min.
5. Addition of hydrogen peroxide / H₂O₂ solution (solution 3): 0.5 ml (g) H₂O₂ if needed, mix wait until reaction terminates.

The order of steps could be changed due to the specific case, and the solutions 1, 2 and 3 could be divided into fractions/parts that are added with delays before addition of the successive fraction to make the process more effective.

### Example 2: Surface cleaning

The surface cleaning case may be regarded as being distinct from the cleaning of porous solid materials, such as soils or sand, because there may be no absorption of the solutions by the substrate and a relatively low reaction volume that will significantly lower the reagent quantities, where it is appropriate to use at first low quantities of NaOH, or to use it in solid form, or to replace it with Na methylate (CH₃ONa), that is less aggressive to metals, but giving the needed alkaline reaction environment.

Foam forming agents (such as surfactant additives) as well as gelation agents are desired for the best performance on surfaces.

Furthermore, in some cases surface cleaning could be provided in a manner described below for the sandy soils treatment (Example 8).

### Example 3: Gravel cleaning

For the embodiment of the method used for gravel cleaning, similar to the embodiment relating to surface cleaning, the technology could be adjusted to the fact that there is low or zero adsorption of the reagents on the substrate particles/stones. However, the method may be performed using big volumes. For such conditions, it was established through scale up laboratory tests, that to reach all the surfaces need to be cleaned up by the reagents and solution it was appropriate to use foam forming agents such as nonionic surfactants, such as industrial surfactants, soap-like substances, or polyfluorinated foam-producing surfactants, that are added to the solutions used in the method.

The foam forming agents or surfactants also improve gravel surfaces cleaning and are introduced being dissolved in solution 1 or are applied directly after addition of solution 1, to cover most of the surfaces being processed.

### Example 4: Mixing mode

To improve the reaction efficiency not only chemical but also mechanical methods could be implemented. It has been determined that mixing of the reaction components significantly increases reaction performance due to de facto mechanical enhancement of the reaction surface. Through mixing or agitation of substrate after addition of the solutions of the method, the pollutant comprised by the substrate is frequently exposed to a new portion of the respective reagents, until the process finalizes. The mixing mode for the substrate decontamination could be provided through the use of different types of industrial mixers directly on site, or on the special landfills. The mixing mode could be implemented as the main process or as an additional mode after the first reaction stage is over before adding of MnO₂ catalyzer, so to mix the polluted substrate until superoxide is producing to get the additional decontamination.

It is a great advantage of the method of the present invention that during its application through mixing mode hydrogen peroxide can be generated by adding solid chemical substances containing H₂O₂ in contact with water producing superoxide radicals. Furthermore, it is possible to add sodium hydroxide in the form of solid dry substance through the mixing mode as well. Consumption of dry components can be easily calculated according to amount of water in reaction volume.

### Example 5: Deep injection

The reagents could be injected into the contaminated layer of substrate, in case if pollutant stays in underground reservoirs or if the contamination diffused to deep layers of soil, etc.

### Example 6: Second reaction stage only application

One of the possible technology embodiments is the repetition of the second and/or third reaction stages. After the first reaction stage is over, and the reaction of superoxide production from H₂O₂ under the MnO₂ catalysis, as it is depicted on the Figure 2, is used to finalize the decontamination, or is used by itself as the replacement for the Fenton's process. In some cases it could be beneficial for the substrate that no Fe accumulation occurs, but only MnO₂ stays in very low quantities as a reaction leftover, which can be considered a more ecologically friendly solution. MnO₂ may even on some types of soil be used as a fertilizer.

Moreover, the catalytic nature of the MnO₂ colloid allows adding H₂O₂ in solution 2 or 3 for superoxide production in repeating mode until the needed results should be obtained. Importantly, no repeated addition of MnO₂ is required, making its residual quantities very low.

### Example 7: Ex situ decontamination in close-loop systems

The method of the invention can be performed in close loop ex situ systems, such as high temperature and high-pressure reactor, for high performance destruction of POPs, meds and other persistent hazardous pollutants that are extremely stable in a natural environment.

The reagents could be mixed as described above, wherein it is important to perform the reaction in a tightly closed reactor, warmed up to 45 °C or more. Such processing prevents emission of by-products or toxic remnants or unreacted parts of initial contaminants into the environment, and could allow to control directly the mass of the contaminant and to not to lose any part of it.

In case of chlorinated hydrocarbons, in the process may be described by the equation for the carbon tetrachloride:

CCl₄ + 6NaOH + 9H₂O₂ → Na₂CO₃ + 4NaCl + 4.5 O₂ + 12H₂O

### Example 8: Variant for the sandy soil treatment

For the sandy soil case, NaOH (reagent A) in solution 1 should be used in a concentration not less than 20% and in volume/amount in 50% less than we can take according to basic formula variant.

Tivida 2300 or other appropriate transphase catalyzer (TPC) should be added directly into basic solution 1, where the concentration of the TPC in solution 1 should be adjusted to no more than 0.05%. This means that no more than 0.5 ml (0.5 g) Tivida 2300 to 1 liter (1.3 kg) of NaOH solution.

A surfactant on a soap base (such as a household cleaning product) should be added in a concentration of 0.05 % (e.g. here - 0.5 g) to 1 liter of NaOH solution (same quantity to Tivida 2300).

MnO₂ can be also added directly into NaOH solution (solution 1) in a concentration of no more than 1g per 5 L (6.5kg) of the NaOH solution.

Basic solution 1 comprising NaOH, TPC, surfactant and MnO₂ can applied to the contaminated substrate in two parts/fractions with a time delay.

Solution 2 comprising hydrogen peroxide (H₂O₂) may be identical to solution 3. The hydrogen peroxide containing solution should be essentially subdivided into 2 or 3 fractions that are added to the substrate sequentially with time delays of preferably 30 min.

After the treatment, the soil should be thoroughly washed with water to clean it from the NaOH leftovers.

The application scheme should be as follows:
- ½ reagent A + ⅓ reagent B - wait for 30 minutes
- ½ reagent A + ⅓ reagent B - wait for 30 minutes
- ⅓ reagent B, wait for 30 minutes
- Water washing.

During the application of the reagents, the soil should not be mixed. However, the substrate may be blown up delicately to loosen the substrate.

### Example 9: Bioremediation preprocessing

In the case that the method of the present invention was not sufficient to completely degrade the POPs comprised by a substrate by oxidation, which might be due to unusually long chains of hydrocarbons, which might result in the formation of epoxides and oxides, the method of the invention is performed in combination with a bioremediation process. Stable chemical compounds, such as epoxides and oxides, can be degraded by microorganisms that can accelerate biological destruction of the pollutants. Moreover, the combination of the method of the invention with bioremediation methods potentiates and accelerates bioremediation in cases where bioremediation alone is considered unacceptable due to extra-toxicity or extra-stability of the contaminant making the environment unadaptable for microflora or making remediation processes too slow.

### Example 10: Liquid substrate treatment

In case of liquid substrate contamination e.g. technical oils contaminated with PCBs or with other persistent fluorinated organic contaminants, an embodiment of the method of the present invention can be used, wherein a close loop reactor system in mixing mode is employed for ex situ treatment of substrates. In such systems, the reagents are thoroughly mixed with the substrate to destroy the contaminant.

Here it should be emphasized that the liquid substrate decontamination is possible in close loop system with mixing by the simple mixer or with barbotage, optionally with high pressure, wherein the reagents are forced to be mixed with the contaminated substrate until the reaction ends.

Independently of the contaminant nature, the liquid substrate should be permanently mixed to expose the contaminants to active superoxide particles and creation of additional surfaces for the interaction of superoxide and the respective contaminants.

In the embodiment described reagents quantities are calculated in the same way to other examples, basing on the substrate volume and contaminant concentration.

### Example 11: Oily phase isolation from soils

If the contaminant is of value, as it is in cases of crude oil spills in sandy soils, for example, it is possible to not to destroy the contaminant, at least not completely, but to isolate and separate it from the substrate for the further processing, such as refinery processes. Accordingly, in such embodiments the oxidation of the contaminant should be minimized, while its adhesion to substrate should be reduced or abolished. In such embodiments of the invention, the method is applied with low amounts of reagents, specifically for the basic solution 1 and with a reduction of the reaction stages comprising the addition of hydrogen peroxide solutions. Due to the lowering or abolishing of adherence of the contaminant to the substrate, the substrate can be separated from the contaminant and the contaminant can be used for further downstream processing. Such methods of separation of contaminants from substrates can be performed in situ and ex situ.

### Example 12: IR spectra overview

The data provided in Figures 3-5 are obtained using the FTIR (Fourier transform infrared spectroscopy) method that is the gold standard in analytical chemistry for direct identification of the chemical structures. Analytics which are based on GC-MS methods could be slightly more "traumatic" for the investigated substances than FTIR. The diagrams represent at first the nature of the substances investigated and their derivatives. Strong correlation with chromatographic methods could be found. Overlooking the diagrams, we can evidently see the strong characteristic peaks for each substance (Fig. 3: railway lubricant grease; Fig. 4: railway lubricant oil, Fig. 5: octane) and its derivatives, and consider the conversion levels by the respective method applied. From the presented data the high potency of the method of the present invention can be determined, as for prominent decrease in the characteristic peaks for each substance tested. In comparison, the technology of comparison of the state of the art provided much less effective degradation.

Railway switch area lubricants - oily and grease - were selected for analysis because of the high chemical stability as for intact substances and for their derivatives. During scale up experiments we have seen that the grease used in the experiment is even insoluble in organic solvents used for oil sludge dissolving. Accordingly, these lubricants are highly persistent substances that are very hard to destroy in natural environment. Moreover, there were strong suspects that the lubricants could not be efficiently decomposed by the technology of comparison reaction, in its initial variant. The data of Figures 3-4 evidently show that both oil and grease have well characterized peaks on the spectra diagrams, which allows evaluating the decomposed quantities and conversion through the respective method or reaction.

All the samples provided are representative of several repeated experiments. All the data are obtained and imported directly from measuring FTIR device BRUKER "Tensor 27". These data represent spectra for dense railway grease (Fig. 3), used by Deutsche Bahn, and special liquid oil (Fig. 4), used in railroad switch lubrication. Both oil and grease samples were prepared for measurements by the direct method of pre-forming contaminated and processed with technology of comparison reagents sand with KBr (in a tableted form). During the measurement KBr and sand spectra were considered as the background values and not represented on the diagrams. Octane is considered to be an ideal lab model of short-chain oil hydrocarbon, which represents the most widespread fraction of the oil pollutants. Octane contaminated sand (Fig. 5) was extracted with CCl₄ before measurement, where solvent spectra was considered as the background value.

According to IR spectroscopy obtained results it should be noted that:
1. The results for the show that the method of the state of the art (technology of comparison) only leads to slight reduction of grease, oil and octane in the contaminated samples.
2. Contrastingly, the method of the present invention shows a prominent decontamination performance leads to an almost complete destruction of the respective contaminant.

### Example 13: UV spectra overview and conclusion

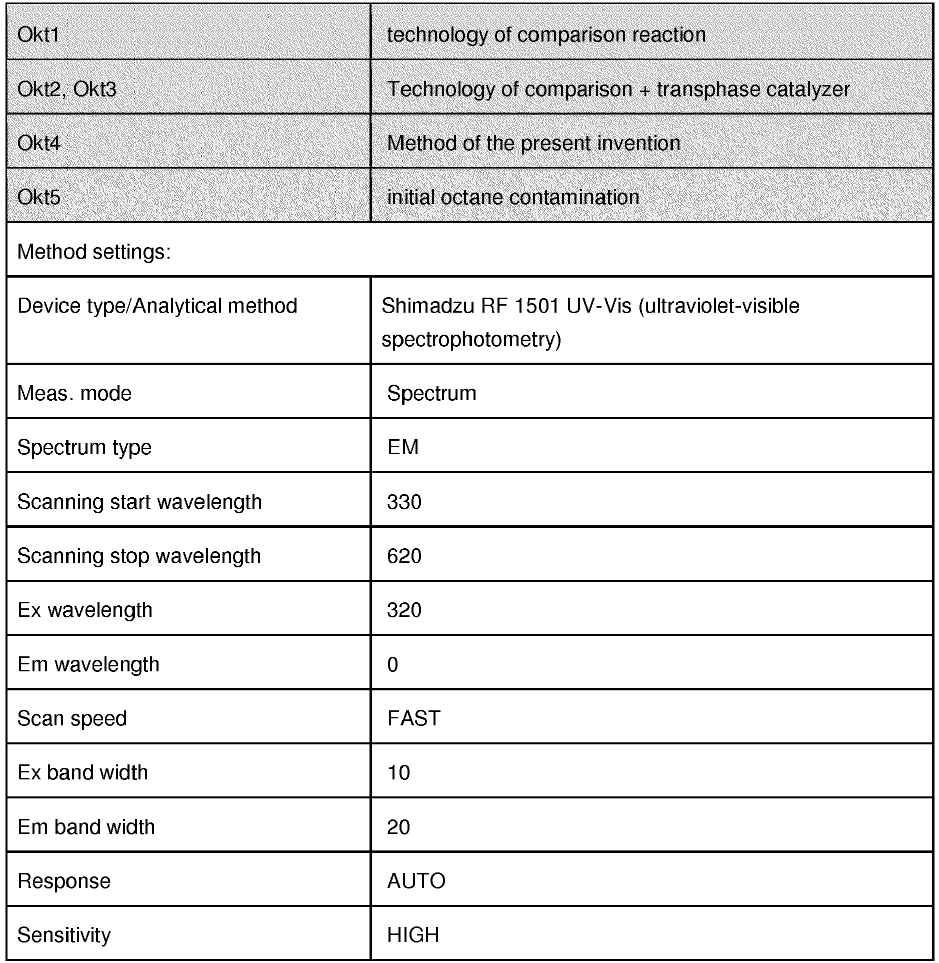

The biggest peak refers the highest resulting contamination level, where the smaller peaks are oxidation products, the less probability for them to possess own fluorescence activity. Initial octane is zero fluorescent so the ideal destruction leads to the zero level of fluorescence without any significant peaks, same to the basic level. The method of the *technology of comparison* is supposed to completely degrade octane, which would lead to the absence of a fluorescent signal after treatment of an octane-containing sample. However, it was suspected that cyclic by-products are generated by the method of the *technology of comparison* in the reaction media. The results demonstrate the *technology of comparison* leads to appearance of abundant fluorescent reaction leftovers, considered to be stable cyclic (probably epoxide) forms, active both in short and long wavelengths of the spectra (340, 430 and 540 nm), depicted by mean Okt1 on the diagram, where the initial octane contamination is depicted as Okt5 (Fig. 6).

Furthermore, transphase catalyzer addition into the reaction media (Okt 2,3) improves reaction speed to some extent, but the reaction accumulates great amounts of the fluorescent byproducts. Moreover, the concentration of the catalyzer should be low (Okt 3); otherwise, in presence of catalyzer surplus, it would not fasten the reaction (Okt 2) (Fig. 6).

Sample treatment according to the method of the present invention comprising the addition of the second reaction phase comprising the addition of a hydrogen peroxide dissociation catalyst (Okt 4) results in almost total byproducts and leftovers destruction, that is depicted as the fluorescence level close to basic line (Oct 5) (Fig. 6).

### Example 14: GC MS overview and conclusions

The two first chromatograms (Samples #3 and 5 respectively (Fig. 7A and 7B)) represent initial sample state and HC decline while providing traditional technology of comparison method, where third diagram (Sample #7 (Fig. 7C)) depicts performance of the improved procedure.

It was determined that the initial contamination was not more than 10%, and final contamination level after treatment according to the method of the present invention almost total HC destruction.

## Claims

1. A method for removal, separation or degradation of one or more persistent organic pollutant(s) (POPs) present in a substrate, the method comprising
- provision of a POP-contaminated substrate,
- a first reaction stage comprising
i. adding to the substrate a basic solution (solution 1), and optionally one or more additives selected from the group comprising a transphase catalyst (TPC) and a hydrogen peroxide dissociation catalyst, and
ii. incubating the substrate with solution 1 and optionally the one or more additives for at least 15 minutes, and
- a second reaction stage comprising
i. adding to the substrate a hydrogen peroxide solution (solution 2) and optionally one or more additives selected from the group comprising a TPC and a hydrogen peroxide dissociation catalyst,
wherein a hydrogen peroxide dissociation catalyst and a TPC are added during the first and/or the second reaction stage.

2. The method according to claim 1, wherein the one or more POPs are selected from the group comprising polychlorinated hydrocarbons (PCHs), polycyclic aromatic hydrocarbons (PAHs), polychlorinated biphenyls (PCBs), chlorinated solvents, petroleum products and pharmaceutical leftovers.

3. The method according to any of the preceding claims, wherein the base of basic solution 1 is a metal hydroxide (MOH) solution, preferably NaOH solution, wherein the concentration of MOH in solution 1 is in the range of 15 - 30 % (w/v) (3.75 - 7.5 M).

4. The method according to any of the preceding claims, wherein the second reaction stage is performed before the first reaction stage, or wherein the first reaction stage is performed before the second reaction stage.

5. The method according to any of the preceding claims, comprising additionally a third reaction stage comprising adding to the substrate a hydrogen peroxide solution (solution 3).

6. The method according to any of the preceding claims, wherein the hydrogen peroxide concentration in solution 2 and/or solution 3 is in a range of 20 - 40 %.

7. The method according to any of the preceding claims, wherein the volume of solution 1 is sufficient to saturate the substrate and to generate an alkaline environment of pH 12-14, and the volume of solution 2 and/or solution 3 is at least 50% of the volume of solution 1.

8. The method according to any of the preceding claims, **wherein** the first, the second and/or the third reaction stage are repeated at least once.

9. The method according to any of the preceding claims, wherein the TPC is a polyhalogenated surfactant, more preferably a polyfluorinated surfactant, and/or the concentration of the TPC in a combined volume of solution 1 and solution 2 is in a range of 0.001 - 10 %, preferably 0.005 % (w/v).

10. The method according to any of the preceding claims, wherein the hydrogen peroxide dissociation catalyst is a manganese (Mn) containing catalyst, preferably MnO, MnO₂ or KMnO₄, and/or the concentration of the hydrogen peroxide dissociation catalyst in a combined volume of solution 1 and solution 2 is in a range of 0.001 - 10 %, preferably 0.05 % (w/v).

11. The method according to any of the preceding claims, wherein a gelation agent is added to the substrate in the first and/or the second reaction stage, wherein preferably the concentration of the gelation agent in a combined volume of solution 1 and solution 2 is in a range of 0.001 - 10 %, more preferably 0.15 % (w/v).

12. The method according to any of the preceding claims, wherein the additives of the first and/or second reaction stage additionally comprise a foam forming agent, preferably selected from the group comprising industrial surfactants, non-ionic surfactants, ionic surfactants, polyfluorinated surfactants and detergents, wherein the concentration of the foam forming agent in a combined volume of solution 1 and solution 2 is in a range of 0.001 - 10 %, preferably 0.05 % (w/v).

13. The method according to any of the preceding claims, wherein the substrate is selected from the group comprising porous solid substrates, such as soils or sand, surface solid substrates, such as gravel and solid surfaces, and liquid substrates, such as mineral oil.

14. The method according to claim 13, wherein the first, second and/or third reaction stage are carried out at a temperature of more than 25°C, preferably 45°C, most preferably at more than 80 °C, and/or at a pressure of more than 1000 hPa, preferably 1200 - 7000 hPa, most preferably at 7000 hPa.

15. The method according to any of the preceding claims, **wherein** the method is carried out in combination with other remediation methods, such as bioremediation.

## Patentansprüche

1. Verfahren zur Entfernung, Trennung oder Zersetzung eines oder mehrerer persistenter organischer Schadstoffe (POPs), die in einem Substrat vorhanden sind, wobei das Verfahren umfasst
- Bereitstellen eines POP-kontaminierten Substrats,
- eine erste Reaktionsstufe, umfassend
i. Zugabe einer basischen Lösung (Lösung 1) und gegebenenfalls eines oder mehrerer Additive, ausgewählt aus der Gruppe, die einen Transphasenkatalysator (TPC) und einen Wasserstoffperoxid-Dissoziationskatalysator umfasst, zu dem Substrat und
ii. Inkubieren des Substrats mit Lösung 1 und gegebenenfalls einem oder mehreren Additiven für mindestens 15 Minuten und
- eine zweite Reaktionsstufe, umfassend
i. Zugabe einer Wasserstoffperoxidlösung (Lösung 2) und gegebenenfalls eines oder mehrerer Additive, ausgewählt aus der Gruppe, die einen TPC und einen Wasserstoffperoxid-Dissoziationskatalysator umfasst, zu dem Substrat,
wobei ein Wasserstoffperoxid-Dissoziationskatalysator und ein TPC während der ersten und/oder zweiten Reaktionsstufe zugegeben werden.

2. Verfahren nach Anspruch 1, wobei das eine oder die mehreren POPs ausgewählt sind aus der Gruppe umfassend polychlorierten Kohlenwasserstoffen (PCHs), polyzyklischen aromatischen Kohlenwasserstoffen (PAKs), polychlorierten Biphenylen (PCBs), chlorierten Lösungsmitteln, Erdölprodukten und pharmazeutischen Resten.

3. Verfahren nach einem der vorhergehenden Ansprüche, wobei die Base der basischen Lösung 1 eine Metallhydroxid-(MOH)-Lösung, vorzugsweise NaOH-Lösung, ist, wobei die Konzentration von MOH in Lösung 1 im Bereich von 15 - 30 % (w/v) (3,75 - 7,5 M) liegt.

4. Verfahren nach einem der vorhergehenden Ansprüche, wobei die zweite Reaktionsstufe vor der ersten Reaktionsstufe durchgeführt wird, oder wobei die erste Reaktionsstufe vor der zweiten Reaktionsstufe durchgeführt wird.

5. Verfahren nach einem der vorhergehenden Ansprüche, umfassend zusätzlich eine dritte Reaktionsstufe, umfassend das Zugeben einer Wasserstoffperoxidlösung (Lösung 3) zu dem Substrat.

6. Verfahren nach einem der vorstehenden Ansprüche, wobei die Wasserstoffperoxidkonzentration in Lösung 2 und/oder Lösung 3 in einem Bereich von 20 - 40 % liegt.

7. Verfahren nach einem der vorhergehenden Ansprüche, wobei das Volumen der Lösung 1 ausreicht, um das Substrat zu sättigen und eine alkalische Umgebung mit einem pH-Wert von 12-14 zu erzeugen, und das Volumen der Lösung 2 und/oder der Lösung 3 mindestens 50% des Volumens der Lösung 1 beträgt.

8. Verfahren nach einem der vorhergehenden Ansprüche, wobei die erste, die zweite und/oder die dritte Reaktionsstufe mindestens einmal wiederholt werden.

9. Verfahren nach einem der vorstehenden Ansprüche, wobei der TPC ein polyhalogeniertes Tensid, vorzugsweise ein polyfluoriertes Tensid, ist und/oder die Konzentration des TPC in einem kombinierten Volumen von Lösung 1 und Lösung 2 in einem Bereich von 0,001 - 10 %, vorzugsweise 0,005 % (w/v) liegt.

10. Verfahren nach einem der vorstehenden Ansprüche, wobei der Wasserstoffperoxid-Dissoziationskatalysator ein Mangan (Mn) enthaltender Katalysator, vorzugsweise MnO, MnO₂ oder KMnO₄, ist und/oder die Konzentration des Wasserstoffperoxid-Dissoziationskatalysators in einem kombinierten Volumen von Lösung 1 und Lösung 2 in einem Bereich von 0,001 - 10 %, vorzugsweise 0,05 % (Gew./Vol.) liegt.

11. Verfahren nach einem der vorhergehenden Ansprüche, wobei dem Substrat in der ersten und/oder zweiten Reaktionsstufe ein Geliermittel zugesetzt wird, wobei vorzugsweise die Konzentration des Geliermittels in einem kombinierten Volumen von Lösung 1 und Lösung 2 in einem Bereich von 0,001 - 10 %, vorzugsweise 0,15 % (Gew./Vol.) liegt.

12. Verfahren nach einem der vorstehenden Ansprüche, wobei die Additive der ersten und/oder zweiten Reaktionsstufe zusätzlich einen Schaumbildner umfassen, vorzugsweise ausgewählt aus der Gruppe der industriellen Tenside, nichtionischen Tenside, ionischen Tenside, polyfluorierten Tenside und Detergenzien, wobei die Konzentration des Schaumbildners in einem kombinierten Volumen von Lösung 1 und Lösung 2 in einem Bereich von 0,001 - 10 %, vorzugsweise 0,05 % (w/v) liegt.

13. Verfahren nach einem der vorhergehenden Ansprüche, wobei das Substrat ausgewählt ist aus der Gruppe umfassend poröse feste Substrate, wie Böden oder Sand, feste Oberflächensubstrate, wie Kies und feste Oberflächen, und flüssige Substrate, wie Mineralöl.

14. Verfahren nach Anspruch 13, wobei die erste, zweite und/oder dritte Reaktionsstufe bei einer Temperatur von mehr als 25°C, vorzugsweise 45°C, am bevorzugtesten bei mehr als 80°C und/oder bei einem Druck von mehr als 1000 hPa, vorzugsweise 1200 - 7000 hPa, am bevorzugtesten bei 7000 hPa durchgeführt wird.

15. Verfahren nach einem der vorhergehenden Ansprüche, wobei das Verfahren in Kombination mit anderen Sanierungsverfahren, wie beispielsweise der biologischen Sanierung, durchgeführt wird.

## Revendications

1. Procédé d'élimination, de séparation ou de dégradation d'un ou plusieurs polluants organiques persistants (POP) présents dans un substrat, le procédé comprenant
- fourniture d'un substrat contaminé par les POP,
- une première étape de réaction comprenant
i. ajouter au substrat une solution basique (solution 1), et éventuellement un ou plusieurs additifs choisis dans le groupe comprenant un catalyseur de transphase (TPC) et un catalyseur de dissociation de peroxyde d'hydrogène, et
ii. incubation du substrat avec la solution 1 et éventuellement le ou les additifs pendant au moins 15 minutes, et
- une deuxième étape de réaction comprenant
i. ajouter au substrat une solution de peroxyde d'hydrogène (solution 2) et éventuellement un ou plusieurs additifs choisis dans le groupe comprenant un TPC et un catalyseur de dissociation du peroxyde d'hydrogène,
dans laquelle un catalyseur de dissociation de peroxyde d'hydrogène et un TPC sont ajoutés pendant la première et/ou la deuxième étape de réaction.

2. Procédé selon la revendication 1, dans lequel le ou les POP sont choisis dans le groupe comprenant les hydrocarbures polychlorés (PCH), les hydrocarbures aromatiques polycycliques (PAH), les biphényles polychlorés (PCB), les solvants chlorés, les produits pétroliers et les restes pharmaceutiques.

3. Procédé selon l'une quelconque des revendications précédentes, dans lequel la base de la solution basique 1 est une solution d'hydroxyde métallique (MOH), de préférence une solution de NaOH, la concentration de MOH dans la solution 1 étant comprise entre 15 et 30 % (p/v) (3,75 - 7,5 M).

4. Procédé selon l'une quelconque des revendications précédentes, dans lequel la deuxième étape de réaction est effectuée avant la première étape de réaction, ou dans lequel la première étape de réaction est effectuée avant la deuxième étape de réaction.

5. Procédé selon l'une quelconque des revendications précédentes, comprenant en outre une troisième étape de réaction comprenant ajouter au substrat une solution de peroxyde d'hydrogène (solution 3).

6. Procédé selon l'une quelconque des revendications précédentes, dans lequel la concentration en peroxyde d'hydrogène dans la solution 2 et/ou la solution 3 est comprise entre 20 et 40 %.

7. Procédé selon l'une quelconque des revendications précédentes, dans lequel le volume de la solution 1 est suffisant pour saturer le substrat et pour générer un environnement alcalin de pH 12-14, et le volume de la solution 2 et/ou de la solution 3 est au moins 50% du volume de la solution 1.

8. Procédé selon l'une quelconque des revendications précédentes, dans lequel les première, deuxième et/ou troisième étapes de réaction sont répétées au moins une fois.

9. Procédé selon l'une quelconque des revendications précédentes, dans lequel le TPC est un tensioactif polyhalogéné, de préférence un tensioactif polyfluoré, et/ou la concentration du TPC dans un volume combiné de solution 1 et de solution 2 est comprise entre 0,001 et 10 %, de préférence 0,005 % (p/v).

10. Procédé selon l'une quelconque des revendications précédentes, dans lequel le catalyseur de dissociation du peroxyde d'hydrogène est un catalyseur contenant du manganèse (Mn), de préférence MnO, MnO₂ ou KMnO₄, et/ou la concentration du catalyseur de dissociation du peroxyde d'hydrogène dans un volume combiné de solution 1 et solution 2 est comprise entre 0,001 et 10 %, de préférence 0,05 % (p/v).

11. Procédé selon l'une quelconque des revendications précédentes, dans lequel un agent de gélification est ajouté au substrat dans la première et/ou la deuxième étape de réaction, dans lequel de préférence la concentration de l'agent de gélification dans un volume combiné de solution 1 et de solution 2 est comprise entre 0,001 et 10 %, de préférence 0,15 % (p/v).

12. Procédé selon l'une quelconque des revendications précédentes, dans lequel les additifs de la première et/ou de la deuxième étape de réaction comprennent en outre un agent de formation de mousse, de préférence choisi dans le groupe comprenant les agents tensioactifs industriels, les agents tensioactifs non ioniques, les agents tensioactifs ioniques, les agents tensioactifs polyfluorés et les détergents, dans lequel la concentration en agent formant mousse dans un volume combiné de solution 1 et solution 2 est comprise entre 0,001 et 10%, de préférence 0,5% (m/v).

13. Procédé selon l'une quelconque des revendications précédentes, dans lequel le substrat est choisi dans le groupe comprenant les substrats solides poreux, tels que les sols ou le sable, les substrats solides de surface, tels que le gravier et les surfaces solides, et les substrats liquides, tels que les huiles minérales.

14. Procédé selon la revendication 13, dans lequel les première, deuxième et/ou troisième étapes de réaction sont effectuées à une température supérieure à 25°C, de préférence 45°C, de préférence à plus de 80°C, et/ou à une pression supérieure à 1000 hPa, de préférence 1200 - 7000 hPa, de préférence à 7000 hPa.

15. Procédé selon l'une quelconque des revendications précédentes, dans lequel le procédé est mis en oeuvre en combinaison avec d'autres méthodes d'assainissement, telles que la bioremédiation.
